(19)

Europäisches Patentamt
European Patent Office
Office européen des brevets

(11)  **EP 3 492 912 A1**

(12)  **EUROPEAN PATENT APPLICATION**
published in accordance with Art. 153(4) EPC

(43) Date of publication:
**05.06.2019  Bulletin 2019/23**

(51) Int Cl.:
*G01N 23/04* (2018.01)

(21) Application number: **16910584.8**

(22) Date of filing: **29.07.2016**

(86) International application number:
**PCT/JP2016/072413**

(87) International publication number:
**WO 2018/020681 (01.02.2018 Gazette 2018/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nikon Corporation
Tokyo 108-6290 (JP)**

(72) Inventors:
• **HAYANO, Fuminori
Tokyo 108-6290 (JP)**

• **MIYASHITA, Kazuyuki
Tokyo 108-6290 (JP)**
• **MACHII, Nobukatsu
Tokyo 108-6290 (JP)**
• **OHKUMA, Hiroya
Tokyo 108-6290 (JP)**

(74) Representative: **Hoffmann Eitle
Patent- und Rechtsanwälte PartmbB
Arabellastraße 30
81925 München (DE)**

(54)  **SETTING METHOD, INSPECTION METHOD, DEFECT EVALUATION DEVICE AND STRUCTURE MANUFACTURING METHOD**

(57)    A setting method for setting at least a part of a region in which a structure of a specimen exists as a target region, for an evaluation of an internal structure of the specimen includes setting an arbitrary position from the region in which the structure of the specimen exists, and setting the target region based on the set position.

FIG. 2

EP 3 492 912 A1

**Description**

INCORPORATION BY REFERENCE

The disclosures of the following priority applications are herein incorporated by reference: International application No. PCT/JP2016/072413 filed July 29, 2016.

TECHNICAL FIELD

The present invention relates to a setting method, an inspection method, a defect evaluation device, and a structure manufacturing method.

BACKGROUND ART

Although a defect such as a micro cavity and the like can be detected by inspecting an specimen along with a high resolution of the x-ray measurement device, a great deal of time is required for the processing of deriving a defect such as a cavity that influence the quality of the specimen. For this reason, a quality determination is performed for defects within a predetermined distance from the machining surface of the specimen (for example, see PTL1). However, in a case where there are a large number of items to be set as conditions for performing the quality determination, a large load is applied to the inspection and evaluation processing, and in a case where the number of the items to be set is small, there is a problem that a defect is desired to be a target of inspection and evaluation is not included in the target.

CITATION LIST

PATENT LITERATURE

PTL1 :Japanese Patent No. 2006-305581 A

SUMMARY OF INVENTION

According to a first aspect, a setting method for setting at least a part of a region in which a structure of a specimen exists as a target region, for an evaluation of an internal structure of the specimen, comprises: setting an arbitrary position from the region in which the internal structure of the specimen exists; and setting the target region based on the set position.

According to a second aspect, a setting method for setting a target region for an evaluation of an internal structure of a specimen, comprises: acquiring position information including a plurality of positions with respect to the specimen; deriving a surface region from surface element object data, representing at least a part of a surface in surface shape model data indicating a surface shape of the specimen, by setting surface boundary position information indicating a boundary of a region of a part of the surface element object data to the surface element object data, based on the position information; and setting the target region based on the surface region.

According to a third aspect, an inspection method for identifying a defect location, comprises: setting the target region in a space of actual data that is based on data obtained by actually measuring the specimen, in a state where the target region set in the setting method according to the first or the second aspect is positionally matched with the actual data; and identifying the defect location within the target region in the space of the actual data.

According to a fourth aspect, a setting method for setting a target region for an evaluation of an internal structure of a specimen, comprises: setting a plurality of the target regions in three-dimensional model data or three-dimensional actual data of the specimen; setting a three-dimensional space between the target regions as a complementary region for a defect inspection or an evaluation based on mutual distance information of the set plurality of the target regions; and setting a new target region including the set target region and the set complementary region.

According to a fifth aspect, a setting method for setting a target region for an evaluation of an internal structure of a specimen, comprises: acquiring surface shape information indicating a surface shape of the specimen and position information relating to a position of a defect estimated to be generated in the specimen; deriving a predetermined region including the position of the estimated defect as a surface region along the surface shape of the specimen; and setting the target region by expanding the surface region in a direction intersecting a direction along the surface shape in the internal structure of the specimen.

According to a sixth aspect, a defect evaluation device configured to set at least a part of a region in which a structure of a specimen exists as a target region for an evaluation of an internal structure of the specimen, comprises: a position information setting unit configured to set an arbitrary position from a region in which the structure of the specimen exists; and a setting unit configured to set the target region based on the set position information.

According to a seventh aspect, a defect evaluation device configured to set a target region for an evaluation of an internal structure of a specimen, comprises: a position information setting unit configured to set position information including a plurality of positions with respect to the specimen; a derivation unit configured to derive a surface region from surface element object data, representing at least a part of a surface in surface shape model data indicating a surface shape of the specimen, by setting surface boundary position information indicating a boundary of a region of a part of the surface element object data to the surface element object data, based on the position information; and a setting unit configured to set the target region based on the surface region.

According to an eighth aspect, a defects evaluation configured to set a target region for an evaluation of an internal structure of a specimen, comprises a first setting unit configured to set a plurality of the target regions in three-dimensional model data or three-dimensional actual data of the specimen; a second setting unit configured to set a three-dimensional space between the target regions as a complementary region for the defect inspection or the evaluation based on mutual distance information of a plurality of the set target regions; and a third setting unit configured to set a new target region including the set target region and the set complementary region.

According to a ninth aspect, a structure manufacturing method is a method, comprises generating design information relating to a shape of a structure, creating the structure based on the design information; acquiring shape information by measuring the shape of the created structures in the target region set by the setting method according to the first aspect using an x-ray inspection apparatus; and comparing the acquired shape information and the design information.

BRIEF DESCRIPTION OF DRAWINGS

FIG. 1 is a figure describing a configuration of an x-ray inspection apparatus and its defect evaluation device according to a first embodiment.

FIG. 2 is a block diagram describing a primary element configuration of the x-ray inspection apparatus and its defect evaluation device according to the first embodiment.

FIG. 3 is a figure schematically illustrating a cylinder block of an engine as a specimen and an example of an evaluation region set in a case where inspecting a cylinder block of the engine.

FIG. 4 is a figure describing a grid.

FIG. 5 is a figure describing an evaluation region set based on important site information.

FIG. 6 is a figure describing an evaluation region set based on a surface risk region.

FIG. 7 is a figure describing a processing for setting an evaluation region based on the surface risk region.

FIG. 8 is a figure describing the processing for setting the evaluation region based on the surface risk region.

FIG. 9 is a figure describing a relationship between a thickness of a specimen and an evaluation region to be set.

FIG. 10 is a figure describing another example of the processing for setting the evaluation region based on the surface risk region.

FIG. 11 is a figure describing another example of the processing for setting the evaluation region based on the surface risk region.

FIG. 12 is a figure schematically illustrating a positional relationship between a surface risk region, an effective interesting region, a calculation surface, and an evaluation region upon the evaluation region is set based on the surface risk region.

FIG. 13 is a figure describing a processing for setting an evaluation region based on an internal risk region.

FIG. 14 is a schematic view for describing an editing processing of the evaluation region.

FIG. 15 is a schematic view for describing the editing processing of the evaluation region.

FIG. 16 is a schematic view for describing the editing processing of the evaluation region.

FIG. 17 is a schematic view for describing the editing processing of the evaluation region.

FIG. 18 is a schematic view for describing the editing processing of the evaluation region.

FIG. 19 is a schematic view for describing a clustering processing.

FIG. 20 is a schematic view for describing the clustering processing.

FIG. 21 is a schematic view for describing an indexing processing for clusters.

FIG. 22 is a schematic view for describing a risk degree determination processing.

FIG. 23 is a schematic view for describing a determination of the risk degree based on a cluster and a size of a machining margin.

FIG. 24 is a figure illustrating results of the risk degree determination in a table format.

FIG. 25 is a figure schematically illustrating an example of a display of the risk degree determination.

FIG. 26 is a flowchart describing an operation of the defect evaluation device according to the present embodiment.

FIG. 27 is a flowchart describing the operation of the defect evaluation device according to the present embodiment.

FIG. 28 is a block diagram illustrating a configuration of a structure manufacturing system according to a second embodiment.

FIG. 29 is a flowchart describing an operation of the structure manufacturing system according to the second embodiment.

DESCRIPTION OF EMBODIMENTS

First Embodiment

An x-ray inspection apparatus and a defect evaluation device of a specimen for the x-ray inspection apparatus will be described according to a first embodiment with reference to the drawings. The x-ray inspection apparatus non-destructively acquires information relating to a structure of a specimen including internal information (for example, an internal structure) of the specimen and the like by emitting an x-ray at the specimen and detecting the transmitted x-ray passing through the specimen. The present embodiment will be described giving an example wherein the x-ray inspection apparatus is used as an internal inspection apparatus which can acquire internal information by acquiring structural information about a cast product such as an engine block, and performs quality control of its specimen based on the internal structure.

Note that the x-ray inspection apparatus is not limited to a cast product such as an engine block, and may also acquire shape information for a resin molded product and the internal structure of a joint part in a case where respective members have been joined using adhesive or welding, and may perform inspection therefor.

Note that the "structure of a specimen" includes the shape and the internal structure of the specimen. Particularly, the shape of the specimen described includes (1) a shape obtained from a surface can be detected by a non-transmissive energy ray (for example, visible light or electron beam) upon directly touching the outside or being emitted or reflected from the specimen, (2) a surface representing holes formed such that part of the holes are formed in a location directly touched from the outside, but the other holes are formed inside the specimen, (3) boundary surfaces of hollow cavities, none thereof being exposed to the surface. The individual elements of surfaces that these shapes can be defined are simply referred to as surface element object data. In addition, surface shape model data includes aggregates of surface element object data and may represent the entire shape of the specimen, or may simply indicate the boundary between the internal structure and the other. On the other hand, in the present specification, the internal structure includes those that can be parameters used for evaluating strength, characteristics of the specimen or a potential of the functionality that the specimen produces, including a distances from the surfaces such as that described in the above-described (1) through (3) to the cavities, the distribution state of the cavities, and the volume ratio relative to the structure occupied by the cavities generated inside the specimen.

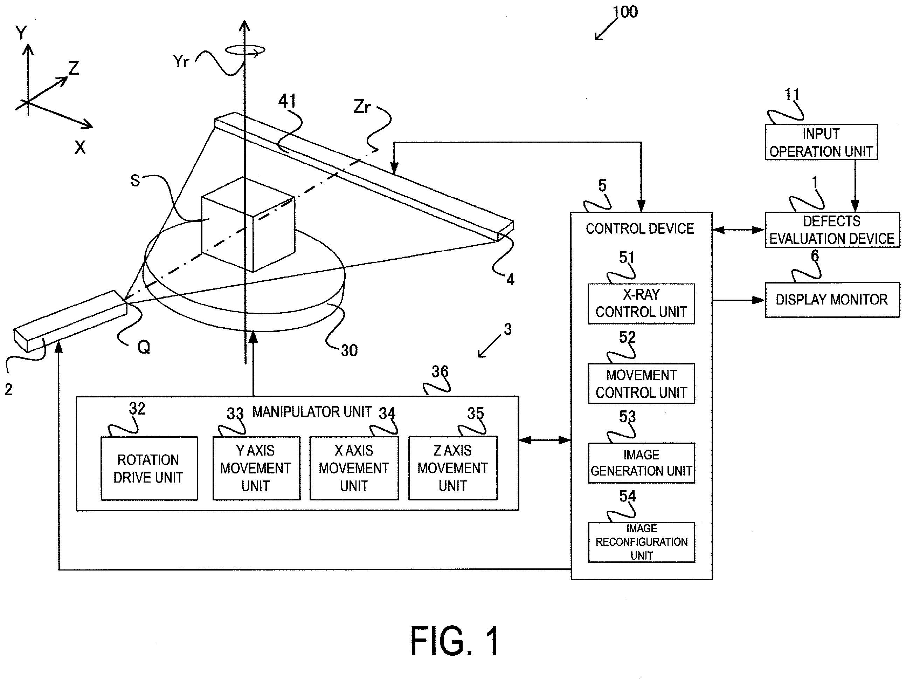

FIG. 1 is a drawing schematically illustrating an example of a configuration of an x-ray inspection apparatus 100 according to the present embodiment. Note that for convenience of description, a coordinate system by the X axis, the Y axis and the Z axis is set as illustrated in the drawing. The x-ray inspection apparatus 100 includes a defect evaluation device 1, an x-ray source 2, a placement unit 3, a detector 4, a control device 5, a display monitor 6, and an input operation unit 11. Note that the defect evaluation device 1 may be configured separately from the x-ray inspection apparatus 100. The x-ray source 2, placement unit 3, and detector 4 are stored inside a housing (not illustrated in the drawing) disposed so as to be substantially horizontal in the XZ plane on top of the floor of a factory and the like. The housing includes lead as a material so that x-rays do not leak to the outside.

The x-ray source 2 emits x-rays in a fan shape (a so-called "fan beam") to the Z axis + direction along an optical axis Zr parallel to the Z axis with the emission point Q illustrated in FIG. 1 as a vertex, in accordance with control by the control device 5. The emission point Q corresponds to the focal spot of the x-ray source 2. That is, the optical axis Zr connects the emission point Q, which is the focal spot of the x-ray source 2, with the center of the image capturing region of the detector 4 described hereinafter. Note that, for the x-ray source 2, instead of emitting x-rays in a fan shape, emitting x-rays in a cone shape (a so-called "cone beam") is also included in one aspect of the present invention. The x-ray source 2 can emit, for example, at least one of: an approximately 50 eV ultrasoft x-ray, an approximately 0.1-2 keV soft x-ray, an approximately 2-20 keV x-ray, and an approximately 20-100 keV hard x-ray, and additionally, an x-ray having an energy of 100 keV or greater.

The placement unit 3 is provided with a placement unit 30 on which a specimen S is placed, and a manipulator unit 36 including a rotation drive unit 32, a Y axis movement unit 33, an X axis movement unit 34, and a Z axis movement unit 35, provided further in the Z axis + side than the x-ray source 2. The placement unit 30 is provided so as to be rotatable by the rotation drive unit 32, and upon the rotation axis Yr moves in the X axis, Y axis, or Z axis directions due to the rotation drive unit 32, it also moves together.

The rotation drive unit 32 is, for example, configured by an electric motor or the like, is parallel to the Y axis and rotates the placement unit 30 with an axis passing through the center of the placement unit 30 as a rotational axis Yr via the rotational force generated by an electric motor controlled and driven by a control device 5 described hereinafter. The Y axis movement unit 33, the X axis movement unit 34, and the Z axis movement unit 35 are controlled by the control device 5, and each move the placement unit 30 in the X axis direction, the Y axis direction, and the Z axis direction respectively so that the specimen S is positioned in the emission range of the x-rays emitted by the x-ray source 2. In addition, the Z axis movement unit 35 is controlled by the control unit 5, and moves the placement unit 30 in the Z axis direction so that the distance from the x-ray source 2 to the specimen S is a distance wherein the specimen S in the captured image is at the desired magnification ratio.

The detector 4 is provided further in the Z direction + side than the x-ray source 2 and the placement unit 30. That is, the placement unit 30 is provided between the x-ray source 2 and the detector 4 in the Z direction. The detector 4 is a so-called line sensor, which has an incident surface 41 extending along the X direction on a plane parallel to the XY plane, x-rays including the transmitted x-rays passing through the specimen S placed on the placement unit 30 emitted from the x-ray source 2 are incident upon the incident surface 41. The detector 4 is configured by a scintillator unit including a publicly known scintillating substance, a photomultiplier tube, a light receiving unit, and the like, it converts the energy of x-rays incident on the incident surface 41 of the scintillator unit to light energy such as visible light or ultraviolet light, amplifies it with the photomultiplier tube, converts the amplified light energy to electric energy with the aforementioned light receiving unit, and outputs it as an electric signal to the control device 5.

Note that the detector 4 may convert the energy of incident x-rays to electric energy and output it as an electric signal without converting it to light energy. The detector 4 has a configuration wherein the scintillator unit, the photomultiplier tube, and the light receiving unit are each divided into a plurality of pixels. Thus, an intensity distribution can be acquired for the x-rays passing through the specimen S emitted from the x-ray source 2. Note that the detector 4 may has a configuration, wherein the scintillator unit is directly formed on the light receiving unit (photoelectric conversion unit) without providing a photomultiplier tube.

Note that the detector 4 is not limited to a line sensor, and may be a two-dimensional planar detector. That is, in the present embodiment, the line sensor for the detector 4 has an incident surface 41 extending in the X direction on a plane parallel to the XY plane, but only one incident surface 41 is disposed in the Y direction. Furthermore, in the XY plane, a plurality of incident surfaces 41 are disposed in the X direction. Also, each of a plurality of the incident surfaces 41 can independently detect the intensity of an x-ray. In the present embodiment, a plurality of the incident surfaces 41 may be aligned in the Y direction. For example in the XY plane in FIG. 1, it may be a two-dimensional planar detector wherein a plurality of incident surfaces 41 are disposed in the X direction and the Y direction. Also, in a case where a two-dimensional planar detector is used, it may be used as a line sensor, wherein only the incident surfaces 41 in the X direction at a predetermined location in the Y direction are used from among a plurality of the incident surfaces 41 aligned in the Y direction. In this case, an intensity distribution of the x-rays on the incident surfaces 41 at the predetermined position in the Y direction may be acquired, and the shape information for the specimen S may be analyzed from the intensity distribution of the x-rays acquired at the predetermined position in the Y direction. Also, in this case, upon acquiring an intensity distribution of the x-rays on the incident surfaces 41 in the X direction at a plurality of positions in the Y direction, an intensity distribution for x-rays on the incident surfaces 41 in the X direction at positions that are mutually separated in the Y direction may be acquired.

The x-ray source 2, the placement unit 3, and the detector 4 are supported by a frame (not illustrated in the drawings). The frame is configured to have sufficient rigidity. Thus, the x-ray source 2, the placement unit 3, and the detector 4 can be stably supported while acquiring a captured image of the specimen S. Further, the frame is supported by an anti-vibration mechanism (not illustrated in the drawings) to prevent vibration generated on the outside from being transmitted as is to the frame.

The input operation unit 11 is configured by a keyboard, various buttons, a mouse, or the like; the position of the region to be inspected is input by an operator at the time of the inspection of the specimen S, as will be described hereinafter, and is operated upon updating the region to be inspected and the like. Upon the input operation unit 11 is operated by an operator, an operation signal corresponding to the operation is output to the defect evaluation device 1.

The control device 5 has a microprocessor and its surrounding circuits and the like, and controls various units of the x-ray inspection apparatus 100 by reading in and executing a control program stored beforehand on a storage medium not illustrated in the drawings (for example, flash memory or the like). The control device 5 includes an x-ray control unit 51, a movement control unit 52, an image generation unit 53, and an image reconfiguration unit 54. The x-ray control unit 51 controls the behavior of the x-ray source 2, and the movement control unit 52 controls the movement behavior of the manipulator 36. The image generation unit 53 generates x-ray captured image data for the specimen S based on an electric signal output from the detector 4, and the image reconfiguration unit 54 generates a reconfigured image based on the captured image data for the specimen S from each differing image capture direction while controlling the manipulator unit 36. This reconfigured image is an image illustrating the configuration of the interior of the site of the specimen S positioned in between the x-ray source 2 and the detector 4, and is output as voxel data. The voxel data represent absorption coefficient distribution of the specimen S. Further, in the present embodiment, information of the three-dimensional internal structure and the surface shape of the specimen S is generated by a surface model construction unit provided inside the image reconfiguration unit 54 based on the reconfigured image acquired at differing positions in the Y direction. In this case, back projection method, filtered back projection method, successive approximation method, and the like exist as image reconfiguration processing.

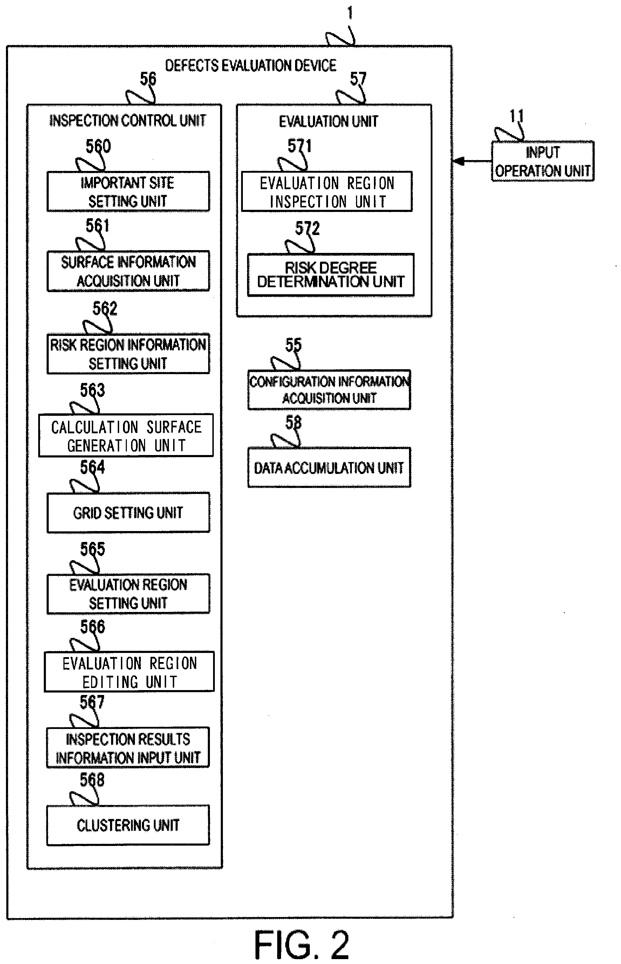

As illustrated in the block diagram in FIG. 2, the defect evaluation device 1 has a microprocessor and its surrounding circuits and the like, and performs various processing upon inspecting a site of the specimen S, described hereinafter, by reading in and executing a control program stored beforehand on a storage medium not illustrated in the drawings (for example, flash memory or the like). The defect evaluation device 1 includes a configuration information acquisition unit 55, an inspection control unit 56, evaluation unit 57, and a data accumulation unit 58. The configuration information acquisition unit 55, serves as an interface for acquiring design information (for example, STL data and polygon data) including surface element object data for expressing the structure of the specimen S and attribute information set for the surface element object data by three-dimensional CAD relating to the specimen S and the like, and information relating to the shape and internal structure and the like of the specimen S obtained by casting simulation (CAE) and the like. Specifically, a network LAN port, a serial bus port, and a wireless communication unit such as Wi-Fi and the like are included. The information input from this interface has a functionality of supplying structural information and the like relating the specimen S to each functionality block of the defect evaluation device 1 such as the inspection control unit 56, the evaluation unit 57, and the data accumulation unit 58. Note that, in the present specification, the internal structure of the specimen S is configured to represent a range between a certain surface forming a boundary between the specimen S and the outside and the other surface, that is, the thickness surrounded by the outer surface and the inner surface of the specimen. In addition, in the present specification, surface element object data is configured to indicate a surface element in which the surface of the specimen S is set based on a predetermined criteria such as an intention of a designer, a functionality that its surface structure demonstrates (for example, an oil passage, a cooling channel, a cylinder, or the like), whether the surface is in succession, or the like. Further, surface shape object data is an aggregate of the surface element object data, and indicates the entire surface shape of the specimen S. The inspection control unit 56 performs a processing for setting a region to be inspected of one part of the specimen S, as is described hereinafter. The evaluation unit 57 performs a risk degree determination processing described hereinafter, for determining a risk of the region to be inspected set by the inspection control unit 56. The data accumulation unit 58 is a non-volatile storage medium for storing various data generated by processing by the inspection control unit 56. Note that the details of the inspection control unit 56 and the evaluation unit 57 will be described hereinafter.

The x-ray inspection apparatus 100 moves the placement unit 30 in each of the XYZ directions to position the specimen S in an inspection position upon performing an inspection of the internal structure of the specimen S. Then, the x-ray inspection apparatus 100 emits a slit beam from the x-ray source 2 having a predetermined width in the Y direction toward the specimen S by rotating it with the rotation driving of the placement unit 30. The detector 4 receives the transmitted x-rays, including x-rays passing through the specimen S, and obtains shape information for the cross-section of the specimen S corresponding to the width (for example, approximately 1 mm) in the Y direction of the slit beam. The x-ray inspection apparatus 100 repeatedly performs the emission of the slit beam toward the specimen S during rotation driving and the movement of the placement unit 30 in the Y direction, that is, the movement of the specimen S in the Y direction. Upon the slit beam is performed in a range extending to the entire region the length in the Y direction of the specimen S placed on the placement unit 30, it can generate shape information for the entire specimen S (hereinafter called a full scan). In the case that the emission of the slit beam is performed in a range of a site of the length in the Y direction of the specimen S placed on the placement unit 30, it can generate shape information for a site of the specimen S based on the transmission image (hereinafter called a partial scan).

The x-ray inspection apparatus 100 in the present embodiment performs an inspection by performing a full scan or a partial scan to a large number of specimens having similar shapes, for example, as in a cast product. A full scan means a measurement operation for generating a reconfiguration image at a predetermined interval in the Y direction to acquire the internal structure of the entire specimen S. The full scan is performed in a time zone in which comparatively a lot of time can be allocated to inspect, for example, a time zone in which mass production is not performed, such as test formation after maintenance of a mold which is used for manufacture the specimen S. A partial scan means a measurement operation to generate a reconfiguration image for only a portion of the specimen S, including an evaluation region described hereinafter from within the specimen S. The partial scan is performed in case that, besides the timing for performing a full scan described above, a large number of the specimens S with a high likelihood of an internal defect occurring (hereinafter called evaluation region) are selected as regions to be inspected and are performed upon inspection.

Three-dimensional structure information including information of materials constituting the three-dimensional internal structure and the internal structure of the specimen S acquired by the x-ray inspection apparatus 100 or information relating to the shape of the specimen S is referred to as actual data in the present specification. Note that, the actual data is a surface model or a solid model generated based on the three-dimensional point information obtained from the reconfigured image, and as the CAD data, the actual data for the surface is held as the surface element object data.

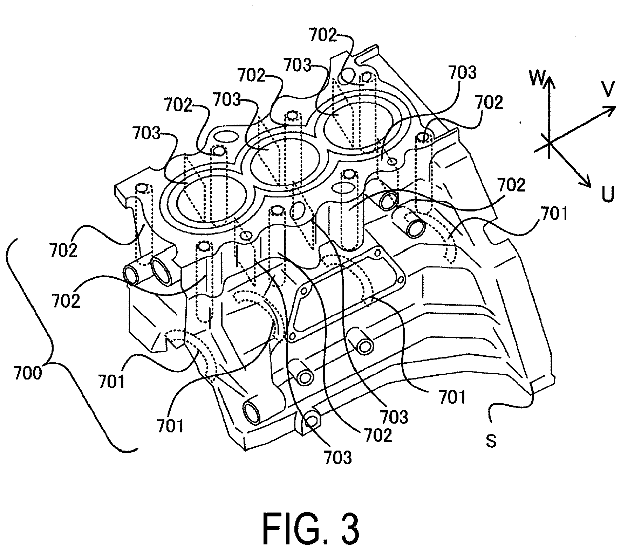

The evaluation region is a site in which the occurrence of defects or the like in the specimen S caused by the structure of the specimen S or the manufacturing method are expected, or a site to perform a defect management accurately obtaining presence or absence of a defect and the risk of it, in terms of quality assurance of the specimen S, and is a target region to be a target for performing an processing for evaluating the state from an investigation result using x-rays as is described hereinafter. Note that, in the following description, in a case where the cylinder block of an engine serves as the specimen S as illustrating in FIG. 3 as an example. In this case, examples can be described in the following (1) to (5) as evaluation regions 700 of the specimen S (the cylinder block of the engine). Further, the evaluation region is configured to be a three-dimensional region. In addition, in the description below, an orthogonal coordinate system by the U axis, the V axis and the W axis is set with respect to the specimen S.

(1) Region Needing Management of Product Functionality

The cast iron liner cast-enclosing the bore site of a cylinder, the cast iron bearing cap cast-enclosing the crank journal site of the cylinder block and rudder frame, the vicinity of the cooling channel, the fastening site of bolt fasteners and the like, and the locations of the oil pan and the mission case are given.

The degree of contact between the iron material and the aluminum material in locations where an cast-enclosing technique is used upon manufacturing the specimen S is an important item to be managed, in a case where contact of the liner site is bad, the contact strength such as to withstand the precision work of bore is insufficient, which has an influence on the circularity of the bore, also, while the engine is running, deformation due to heat generation is uneven, increasing the sliding friction of the piston ring. In either case, this brings about a drop in output and a worsening of fuel efficiency. For the bearing cap, the degree of contact is, of course, important, but in a case where there are many cavities, since this site has a large load placed thereon, this becomes a problem for the mechanical strength. An increase in load from the crankshaft due to engine running can ultimately be connected to crack occurrence.

In a case where cavities occur in succession in the thin site in the vicinity of the cooling channel, the risk of a cooling water leak increases. Thus, it is preferable that an evaluation region be set in a direction where the particularly thin site in the vicinity of the cooling channel extends. All engine blocks are to be tested with a leak tester after rough machining of the cooling channel, but it is preferable that the risk of a leak is known at an early stage before rough machining. Since the fastening site of bolt fasteners and the like is a site on which a load is placed, there is a need to check the presence of a crack and the possibility that cavities grow to a crack. Normally, although penetrant inspection is used; x-ray inspection is effective for an inspection of this site. An inspection of limited sites is effective for the oil pan, mission case, or the like.

(2) Region of a Casting Surface of a Casting

In a case where molten metal is properly cooled at a contact surface of the mold and the molten metal, a structure become extremely fine in the surface (casting surface) formed in contact with the casting mold. Such fine layer is generally at a depth of about 0.5 mm to 1.0 mm from the surface of the casting surface. In a case where such a fine layer is formed, the possibility of leakage of cooling water and the like through a cavity and the like is low. However, there is a case where seizure of the mold occurs on the surface of the casting. Seizure means that the surface of the casting peels off and sticks to the mold due to too high temperature of the mold, and the surface of the casting becomes coarse. Seizure easily occurs in protrusions or corners where heat dissipation is difficult in the mold, that is, in convex portions or recessed portions in castings. Because the casting surface is in coarse state in the vicinity of the seizure site and in the seizure site, the cavities and the like existing in the site (shallow site) close to the surface of the casting have high possibility to cause leakage and insufficient strength, and is dangerous, it needs to be an evaluation region.

(3) Region Decided by Simulation

There is also a need to make sites wherein the possibility that a defect may occur is predicted in a simulation into evaluation regions. There is also a need to make, misrun of molten metal at the confluence of molten metal, gas cavities generated by entrainment of gas by the molten metal and shrinkage cavities in portions where the thickness greatly changes, into evaluation regions.

(4) Region in the Vicinity of Machining Surfaces

The peripheral of machining surfaces assumed to be post-machined after casting are set as evaluation regions. This is because there is a problem in that cavities that do not appear on the surface at the state in which it was cast will appear after post-machining. For example, in a case where the machining surface is a sliding surface, there is a possibility that the member and the like of the mating part of sliding is scratched in a case where the cavities appear on the machined surface. In addition, there is a possibility that an oil film of the oil at the sliding portion is not suitably maintained. Also, in a case where a gasket and the like is provided on the machining surface, there is a possibility that a sealing property may be hindered in a state where the cavity appears on the machined surface.

(5) Region Determined Empirically

In the engine block, it is preferable that the region corresponding to the vicinity of core pin and vicinity of a gate of the mold is set as an evaluation region. In the mold, there is a possibility that the core pin, at which temperature rise and falling is extremely large, becomes worn or being bent, furthermore, the possibility of wearing of the mold surface in the vicinity of the gate at which molten metal flows at high speed is higher than other portion of the mold. For this reason, in the engine block, there is a need to perform the inspection at a high frequency in the regions corresponding to these portions of the mold.

As illustrated in FIG. 3, in the evaluation region 700, various three-dimensional shapes are included. Inside the engine block, an evaluation region 701 in the vicinity of the crank journal site is a semi-circular arc shape with thickness. An evaluation region 702 in the vicinity of the core pin is a cylinder shape enclosing the core pin. Also, an evaluation region 703 for managing the dimensions of thickness and the like is a shape including the dimension measurement target. An evaluation region of a portion wherein shrinkage cavities are predicted to occur in a simulation is an indefinite shape as described hereinafter.

In recent years, since the resolution of the x-ray apparatus has been improved, it becomes possible to inspect internal defects such as minute cavities inside the specimen S. Generally, internal defects such as cavities generated in the specimen S like a casting are scattered in the internal structure of the specimen S, and the number of the cavities distributed is dramatically larger as the size becomes smaller. For example, if the resolution of the x-ray apparatus is doubled, internal defects in a size of larger than 1 mm could be detected in the related art, whereas, it becomes such that internal defects in a size of 0.5 mm can be detected. As a result, the number of detectable internal defects has become not only doubled, but much more than doubled. Particularly, recent x-ray apparatus can detect internal defects of a size of 50 $\mu$m, and the number of detectable internal defects by such an inspection apparatus becomes enormous. In a case where the quality determination of a casting based on an enormous number of internal defects is automatically performed, the setting of the evaluation region as an inspected region as a target of the quality determination is important.

In the present embodiment, the processing for setting the evaluation region is automated by the defect evaluation device 1 by performing the processing relating to the setting of the evaluation region described before. In the present embodiment, the inspection control unit 56 of the defect evaluation device 1 performs processing relating to the setting of the evaluation region.

As illustrated in the block diagram of FIG. 2, the inspection control unit 56 includes an important site setting unit 560, a surface information acquisition unit 561, a risk region information setting unit 562, a calculation surface generation unit 563, a grid setting unit 564, an evaluation region setting unit 565, an evaluation region editing unit 566, an inspection result information input unit 567, and a clustering unit 568.

The important site setting unit 560 acquires surface shape model data such as three-dimensional CAD relating to the specimen S acquired by the configuration information acquisition unit 55. The important site setting unit 560 derives information relating to the important site of the specimen S (hereinafter referred to as important site information) from design information including surface element object data constituting the surface shape model data and attribute information given to the surface element object data. As an important site, for example, surface shape such as a machined surface, a water jacket, an oil passage, and the like of the specimen S, which are regions requiring management due to the product functionality can be exemplified. That is, the important site information can be one element of surface element object data representing a part of the surface shape model data. Based on the derived important site information, the evaluation region is set by the evaluation region setting unit 565 described later. The important site setting unit 560 gives attribute information representing an attribute to which the important site is classified with respect to the derived important site. The attribute information can be the name of the important site (processed surface, water jacket, oil passage, and the like). The derived important site is stored in the data accumulation unit 58 as surface information together with the attached attribute information. Note that, in the following embodiments, in a case where there is no particular description, it is configured that the important site is set on the surface to be created intentionally by the designer in the specimen S.

The surface information acquisition unit 561 derives the surface shape model data of the specimen S from the design information such as the three-dimensional CAD or the actual data of the specimen S acquired by the configuration information acquisition unit 55. The surface shape model data of the specimen S derived by the surface information acquisition unit 561 is used together with the risk region information set by the risk region information setting unit 562 described later upon the evaluation region setting unit 565 sets the evaluation region. Based on the information relating to the casting obtained by the configuration information acquisition unit 55 through the casting simulation and the like, the risk region information setting unit 562 sets the position information of the risk region where the defect is expected on the surface and the internal structure of the specimen S, or the position information and the risk degree as the risk region information. As the risk region information, there are, for example, a surface risk region and an internal risk region of the specimen S.

As the surface risk region, there are regions where the surface of a casting having a predetermined temperature or higher, a site at which seizure easily occurs because of poor cooling (for example, a convex portion or a recessed portion of the above-described casting), or a region in which a gap is expected to be generated between the casting and the mold, and the like. The risk region information is the surface risk region described above, or the combination of the position information and the temperature information in the case of a casting surface having predetermined temperature or higher. As the internal risk region, there are regions where the inside of the casting in which the solidification time required for the solidification of the molten metal is longer than the surroundings, the region where the shrinkage cavities are predicted to occur in the solidification process, the region where the gas cavity is expected to occur, a site which can be a risk by a casting process such as run of molten metal is poor. In addition, as the internal risk region, there may be a region where a crack and the like may occur from the cavity and the like due to heat treatment or rough machining which is a post-casting process such as a region having large internal stress (residual stress). In this case, the risk region information includes the combination of the solidification time and the position information of the internal risk region described before or the position information of the region where the solidification time of the molten metal is long, the combination of the position information and the degree (Niiyama criteria) of the region where shrinkage cavities is predicted to occur, and the combination of the position information of the region with large internal stress and the internal stress.

Note that, the results of the casting simulation can be output for general software of structure analysis. Also in the present embodiment, the output for the software of the structure analysis or the result analyzed by the software of structure analysis, for example, thermal stress analysis or the like may be acquired as CAE data. In that case, the obtained CAE data may be data such as NASTRAN or PATRAN format in some cases in a morphology applicable to the finite element method or the difference method. Note that, in the present embodiment, the results of the casting simulation should indicate the position information of the risk region or the position and risk degree (temperature, stress, and the like) of the risk region.

The calculation surface generation unit 563 derives a calculation surface to be used for generating the evaluation region based on the surface risk region from the surface shape model data of the specimen S. As described later in detail, the calculation surface is used by the evaluation region setting unit 565 to generate the evaluation region. The grid setting unit 564 sets a grid described later in design information such as CAD representing the specimen S. The evaluation region setting unit 565 generates an evaluation region as a target for performing a processing of evaluating the state from the inspection results by the x-ray such as described later. The evaluation region editing unit 566 performs editing processing such as enlargement and concatenation with respect to the evaluation region generated by the evaluation region setting unit 565 based on a predetermined condition. The inspection result information input unit 567 acquires data obtained which the subject S is actually measured by the x-ray inspection apparatus 100, that is, actual data of the specimen S. Of course, at this time, voxel data may be simply used, and the data may be such that the boundary of the connection surface with the gap or the outside is known. The inspection result information input unit 567 position matches the surface shape model data obtained from the CAD and the like and the actual data as the inspection results. Note that, a portion having cavities or having a shape that is not intended by the manufacturer is expressed by a coordinate system set by the surface shape model data obtained from CAD and the like as the position information of the defects by recognizing the internal cavity and the like of the specimen S from the actual data, in light of the judgment of the user and the predetermined judgment criteria. Based on the inspection result information acquired by the inspection result information input unit 567 and the evaluation region generated and edited by the evaluation region setting unit 565 or the evaluation region editing unit 566, the clustering unit 568 performs clustering processing to cluster the cavities and the like scattered in the evaluation region.

The details of the functionality of the inspection control unit 56 described before will be described hereinafter.

There are grid setting processing, evaluation region setting processing, evaluation region editing processing, and clustering processing as processing relating to the setting of the evaluation region performed by the inspection control unit 56. Hereinafter, the description will be performed separately for the grid setting processing, the evaluation region setting processing, the evaluation region editing processing, and the clustering processing.

1. Grid Setting Processing

In the present embodiment, upon setting the evaluation region, the grid setting unit 564 sets a plurality of lattice shape grids in the design information acquired by the configuration information acquisition unit 55.

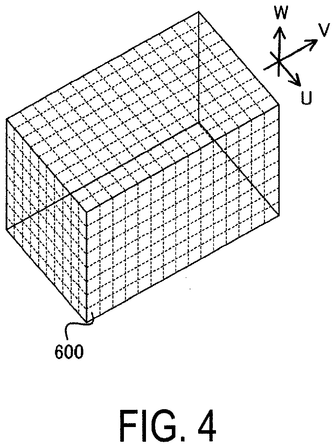

One example of a grid 600 is illustrated in FIG. 4. The grid 600 is, for example, a cube, and is provided in a lattice shape on three-dimension along each of the U, V and W directions. Note that the grid 600 is not limited to a cube, but may be a rectangular parallelepiped, a tetrahedron, or the like. A plurality of the grids 600 are applied to specimen S having various three-dimensional shapes and sizes. Thus, the evaluation region set with respect to the specimen S as described later is represented by the grid 600.

2. Evaluation Region Setting Processing

Evaluation region setting unit 565 sets evaluation region by using the grid 600 set by the grid setting unit 564. The evaluation region setting unit 565 performs setting of the evaluation region based on the important site, setting the evaluation region based on the surface risk region, and setting the evaluation region based on the internal risk region. Hereinafter, description will be performed separately for the case of setting the evaluation region based on the important site, the case of setting the evaluation region based on the surface risk region, and the case of setting the evaluation region based on the internal risk region.

2-1. Case of Setting Evaluation Region Based on important Site

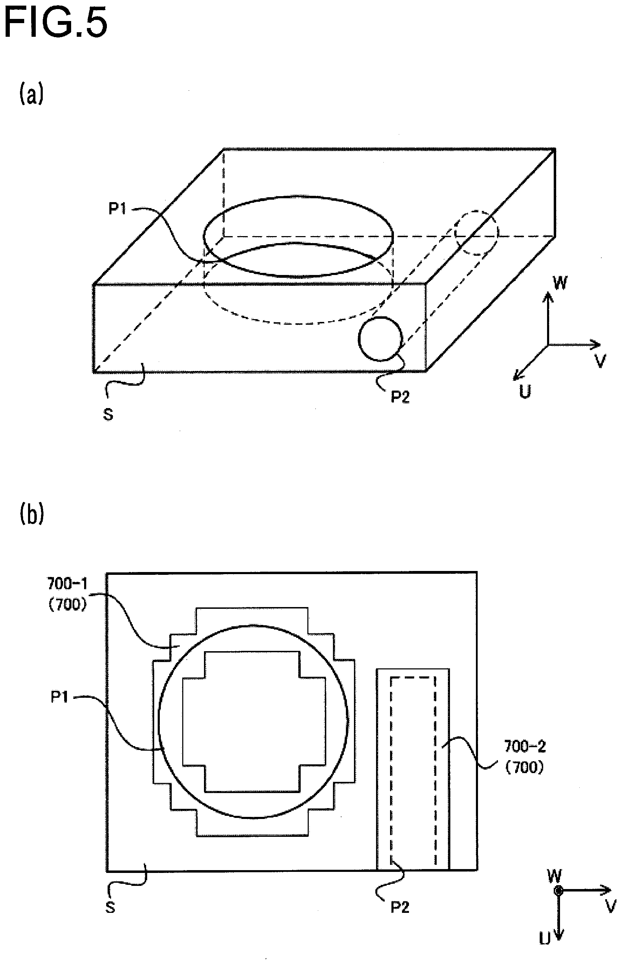

The evaluation region setting unit 565 sets the evaluation region based on the important site information derived by the important site setting unit 560. That is, the evaluation region setting unit 565 sets each of important sites (for example, machined surface, water jacket, oil passage, or the like) as the evaluation region represented by the grid 600.
The evaluation region 700 set by the evaluation region setting unit 565 is schematically illustrated in FIG. 5. FIG. 5 is a figure schematically illustrating the surface shape model data of a part of the specimen S (engine block) in a simplified manner, and FIG. 5(a) is a figure schematically illustrating an important site information derived by the important site setting unit 560, that is, a surface shape model of a site classified for each attribute. Note that, this surface shape model may be generated from design information such as CAD data and the like of the specimen S or generated from the shape measurement result acquired by measuring the specimen S with the x-ray inspection apparatus 100. The site P1 corresponds to surface element object data configuring the water jacket of the engine block, and the site P2 corresponds to surface element object data configuring the oil passage of the engine block. As a method for designating a portion as an important site it may be a method for designating object data corresponding to conditions of important sites as important site information based on attribute information attached to surface element object data, and also, may be a method for designating by displaying the surface shape model data of the specimen S via the user interface, and designating at least one place in three-dimensional coordinate where the surface element object data recognized by the user as an important site of the surface shape model data is located. Further, the surface of the specimen S is not always necessary to be directly designated, and a position close to the surface element object data desired to be designated may be designated. FIG. 5(b) schematically illustrates the evaluation region 700-1 set by the evaluation region setting unit 565 for the site P1 and the evaluation region 700-2 set for the site P2. Note that, FIG. 5B is a plan view of the specimen S in the UV plane. In FIG. 5(b), although the grid 600 is omitted for the convenience of drawing, but in reality the evaluation region 700 is represented as a region having a three-dimensional spread by the grid 600. As described above, in a case where the surface of the specimen S serving as the reference for determining the evaluation target region of the internal structure can be specified based on the important site information, the evaluation region setting unit 565 sets the evaluation region 700 with respect to the surface of the specimen S as the important site. The attribute information and ID are attached to the set evaluation region 700 and stored in the data accumulation unit 58. The attribute information is information indicating the attribute for which the evaluation region 700 is set, and is a water jacket in the case of the site P1, and an oil passage in the case of the site P2. In addition, the ID is information for identifying the evaluation region 700, and is, for example, a number, an alphabet, or the like.

2-2. Case of Setting Evaluation Region Based on Surface Risk Region

The evaluation region setting unit 565 sets evaluation region 700 even with respect to the surface of the specimen S having possibility of occurrence of seizure and the like. The evaluation region setting unit 565 sets the evaluation region in which a three-dimensional position to evaluate a defect is represented by the grid 600 based on the surface shape model data of the specimen S derived by the surface information acquisition unit 561, the risk region information set by the risk region information setting unit 562, and the calculated surface created by the calculation surface generation unit 563. A detailed description is given below.

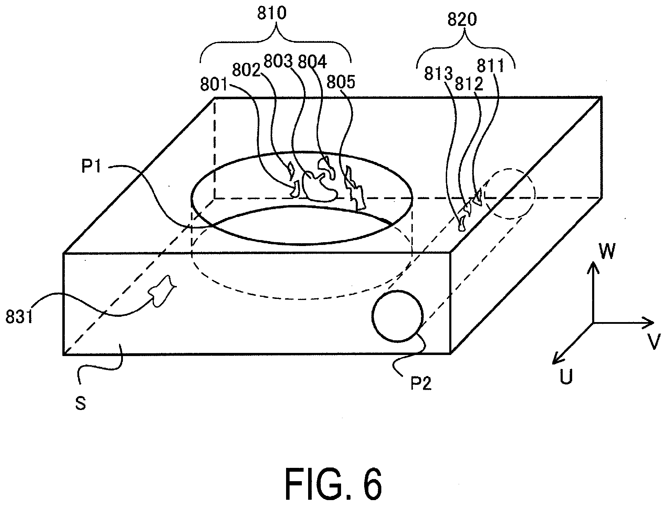

FIG. 6 is a figure schematically illustrating a part of the specimen S in a simplified manner similarly to FIG. 5. In FIG. 6, the sites P1 and P2 are both machined surfaces, the surface risk regions 801 to 805 are scattered in the site P1, and the surface risk regions 811 to 813 are scattered in the site P2. Note that, the surface risk regions 801 to 805 are collectively referred to as a surface risk region 810 and the surface risk regions 811 to 813 are collectively referred to as a surface risk region 820.
The calculation of casting simulation is carried out in a mesh unit by dividing the space into meshes with an orthogonal grid or a nonorthogonal grid. As a consequence, the spatial information obtained by the calculation result of the casting simulation becomes a shape based on the calculation mesh. The mesh size is usually about several millimeters in the case of a size such as an engine for an automobile on account of calculation accuracy and processing load (calculation time). Thus, the risk region information is also spatially expressed as an aggregate of a plurality of meshes and does not exactly match the shape of the actual surface risk region. In other words, in a case where superimposing the result of the casting simulation and the design information such as CAD, the surface risk region becomes a shape that bite into the surface shape model data expressed on the design information, or a state that appearing from the surface shape model. The calculation surface generation unit 563 sets the calculation surface 830 from the site P1 and site P2 as the surface element object data based on the surface risk regions 810 and 820 by such a casting simulation and the like.

However, in a case where the calculation surface 830 is set over the entire surface recognized as one surface in the design information, a region in which the possibility of occurrence of the seizure and the like is low is also included in the calculation surface 830 and set. For example, in a case where the calculation surface 830 is set along the entire surface of the parts P1 and P2, the surface to be calculated target becomes very large. In the case where the calculation surface is set in this way, the positional relationship between cavities 831 and the like and the surface of the site P1 which is away from the surface risk regions 810, 820 and is not the target of evaluation because of the risk is low also will be the target to calculation. The non-target cavity 831 is noise upon evaluating the surface risk regions 810 and 820. In the case of evaluating the non-target cavity 831 and the like, a processing time will increase. In order to inhibit such the processing time increase and noise generation, in the present embodiment, the calculation surface generation unit 563 sets a calculation surface on a part of the surfaces of the sites P1 and P2. Note that, in the following description, although the processing performed with respect to the surface risk region 810 of the site P1 will be mainly described, the same processing is also performed on the surface risk region 820 of the site P2.

The calculation surface generation unit 563 derives a surface region to be a calculation surface from the surface of the site P1 by setting the surface boundary position information that is the boundary of a part of the surface of the site P1 (that is, the surface element object data). The surface boundary information is generated based on the position information indicating the surface risk region 810. In this case, the calculation surface generation unit 563 groups the surface risk regions 801 to 805 of the site P1. The calculation surface generation unit 563 overlays the scattered surface risk regions 801 to 805 and the grid 600. Note that, each of the surface risk regions 801 to 805 is configured by a plurality of pieces of the position information located on the surface shape model data of the specimen S.

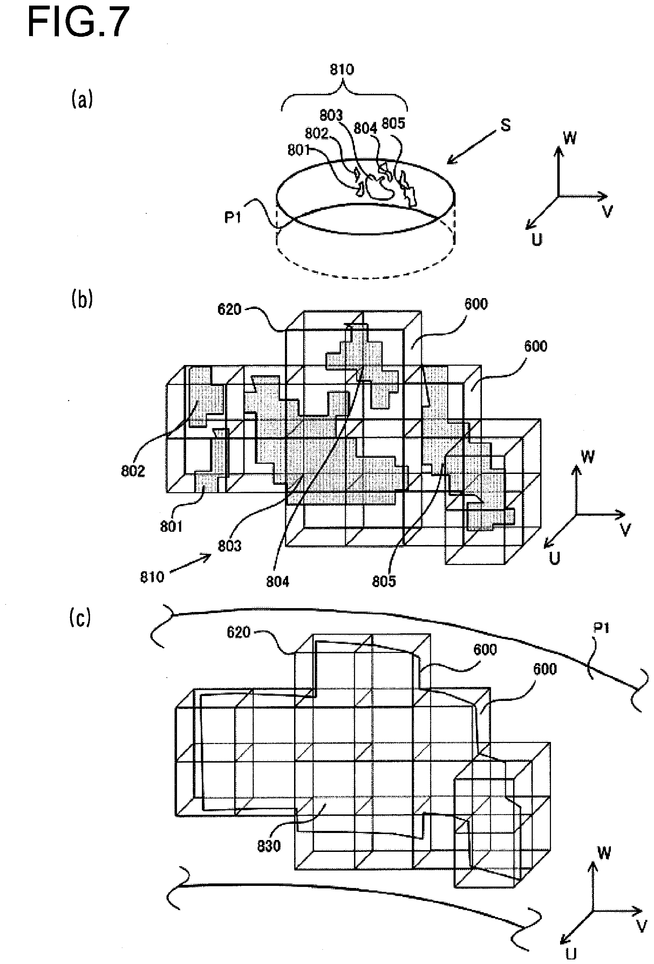

FIG. 7 is a figure schematically illustrating a relationship between the surface risk regions 801 to 805 of the site P1 and the grid 600. FIG. 7(a) illustrates the surface risk regions 801 to 805 of the site P1, and FIG. 7(b) is an enlarged view of a part of FIG. 7(a) overlaid on the grid 600. As described above, since the result of the casting simulation is expressed in a mesh unit, the surface risk regions 801 to 805 may have a volume. The calculation surface generation unit 563 derives the grid 600 in which the area of the surface risk region 810 included in each grid 600 is equal to or greater than a predetermined value among the grids 600 included in the surface risk region 810. Alternatively, the calculation surface generation unit 563 derives the grid 600 including the surface of the site P1 where the distance up to the surface risk region 810 is equal to or less than the predetermined value. Thus, an arbitrary position is set by the calculation surface generation unit 563 from within the area where the internal structure of the specimen S exists. The calculation surface generation unit 563 generates the effective interesting region 620 by deriving the grid 600 as described above and derives a part of the surface element object data located in the derived grid 600. That is, the calculation surface generation unit 563 generates an effective interesting region 620 (group boundary position information) which is a part of the surface of the site P1 with respect to the grouped surface risk region 810.

The calculation surface generation unit 563 derives a surface region which is a common part between the effective interesting region 620 represented by the created grid 600 and the surface of the site P1 expressed by design information such as CAD as the calculation surface 830 (see FIG. 7(c)). That is, the calculation surface generation unit 563 derives the inside of a region surrounded by the surface boundary position information within the surface of the site P1 as the calculation surface 830.

Note that, applying the same processing with respect to the surface risk region 820 of the site P2 to generate an effective interesting region represented by the grid 600 and based on the generated effective interesting region and CAD and the like, the calculation surface generation unit 563 derives the calculation surface.

Note that the surface risk regions 811 to 813 configuring each of the surface risk regions 820 are also configured by a plurality of the position information located on the surface shape model data of the specimen S.

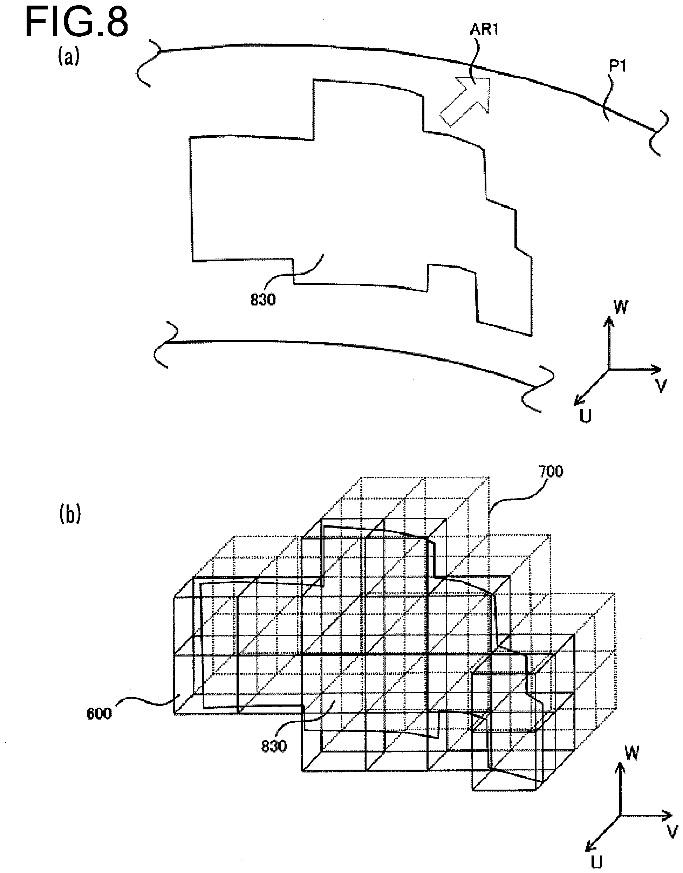

The evaluation region setting unit 565 sets the evaluation region based on the calculation surface 830 derived as illustrated in FIG. 7(c). In this case, as illustrated in FIG. 8(a), the evaluation region setting unit 565 expands the region by the grid 600 unit at a predetermined distance from the calculation surface 830 toward the region formed by the internal structure of the test specimen S toward the normal direction of the calculation surface 830 indicated by the arrow AR1, so as to generate the evaluation region 700. For example, the evaluation region setting unit 565 expands the predetermined value at the distance correspond to two of the grid 600 in the normal direction of the calculation surface 830. Note that, the expanding direction is not limited to the normal direction of the calculation surface 830 but may be any direction as long as the material constituting the structure of the specimen S exists. Further, the case where the calculation surface 830 is expanded in a direction including the surface of the set site P1 is also included in the present invention. Thus, as illustrated in FIG. 8(b), the evaluation region 700 is set by expanding the area toward the inside of the specimen S with the calculation surface 830 as the start point. In FIG. 8(b), the expanded grid 600 is illustrated by broken lines. Note that, the predetermined value is not limited to the distance corresponding to two of the grids 600, and may be a distance corresponding to three or more of the grids 600 or a distance corresponding to one grid 600. Further, as the predetermined value, it may be a fixed value (predetermined distance), for example, 5 mm. Also, the predetermined value may be set by the user. In this case, the user may input the predetermined value and the number of predetermined grids 600 using the input operation unit 11.

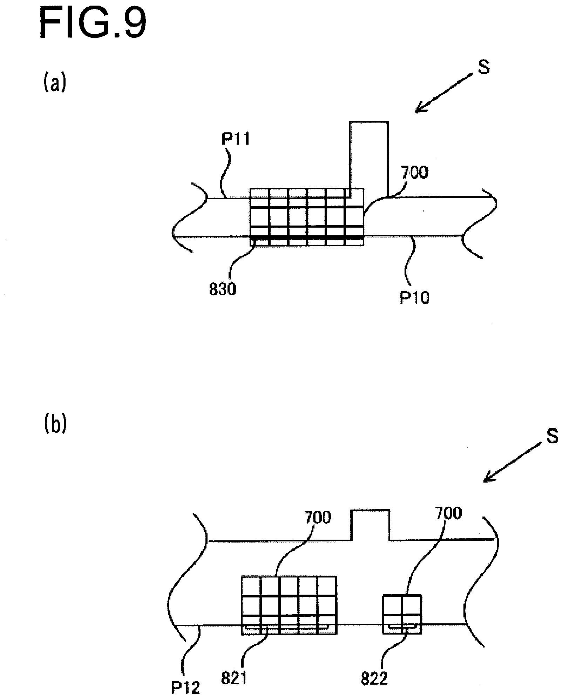

Note that the extension of the calculation surface 830 upon generating the evaluation region 700 is not limited to the above example. For example, in the engine block as the specimen S, even if the shape is complicated, such as the transmission case or the oil pan, the change of the thickness is small and the thickness is at most about 5 to 10 mm for example. FIG. 9(a) schematically illustrates a cross section of the specimen S in this case. FIG. 9(a) illustrates a case where the calculation surface 830 is derived on the surface of the site P10 of the specimen S. In this case, the evaluation region setting unit 565 may expand the calculation surface 830 up to the surface of the site P11 facing to the surface of the site P10 according to the respective distance, based on the position information of the surface element object data on the location facing to the surface region in which the calculation surface 830 is set and the position information of the calculation surface 830, so as to generate the evaluation region 700.

Further, different from the case where the thickness is thin as illustrated in FIG. 9(a), in a case where the thickness is thick, the evaluation region setting unit 565 may determine the distance expanding the calculation surface 830 based on an area of the surface risk region. FIG. 9(b) schematically illustrates the cross section of the specimen S in this case. On the surface of the site P12 of the subject S, it is configured that a first surface risk region 821 having a surface area larger than a predetermined value and a second surface risk region 822 having a surface area equal to or less than the predetermined value are existed. In this case, the evaluation region setting unit 565 may expand the evaluation region 700 toward the inside of the specimen S by a distance corresponding to two of the grid 600, with respect to the derived calculation surface 830 based on the first surface risk region 821, so as to generate the evaluation region 700. The evaluation region setting unit 565 may expand the evaluation region 700 toward the inside of the specimen S by a distance corresponding to one of the grid 600, with respect to the set calculation surface 830 based on the first surface risk region 822, so as to generate the evaluation region 700.

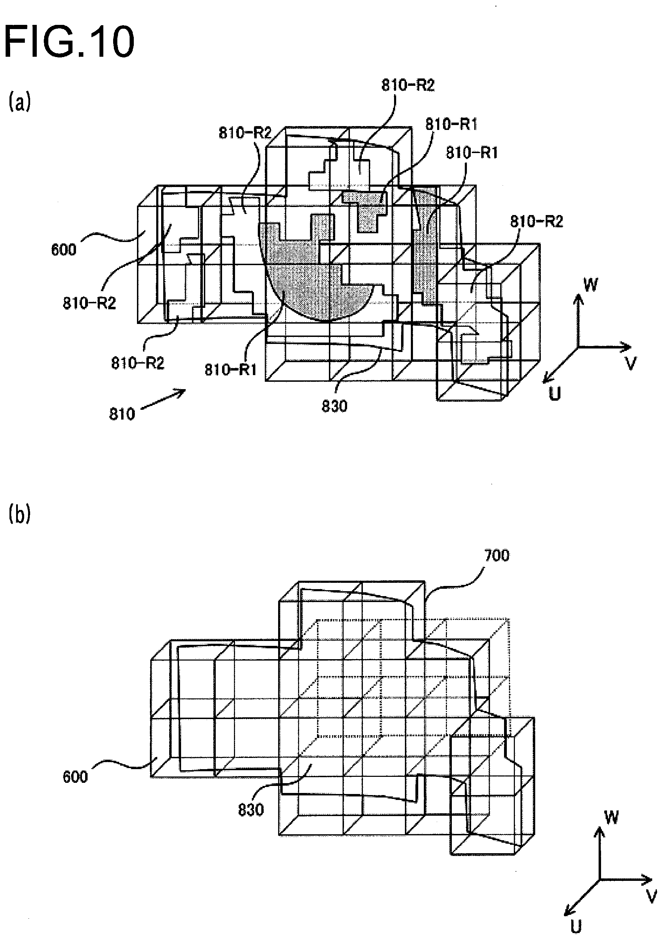

Further, the evaluation region setting unit 565 may generate the evaluation region 700 by changing the distance expanding in the normal direction of the calculation surface 830 based on the risk degree of the surface risk region information. FIG. 10(a) schematically illustrates the surface risk region 810 and the calculation region 830 in this case. In this case, as the risk degree of the surface risk region information, for example, the seizure temperature is taken as an example. In FIG. 10(a), dots are attached and represented in a high temperature range where the seizure temperature is higher than the predetermined value in the surface risk region 810. The evaluation region setting unit 565 expands the calculation surface 830 by a large distance (deeper) to the inside of the specimen S, with respect to the higher temperature range 810 - R1 than the predetermined value in the surface risk region 810, and expands the calculation surface 830 by a small distance (shallowly) to the inside of the specimen S, with respect to the lower temperature range 810 - R2 than the predetermined value in the surface risk region 810. For example, the evaluation region setting unit 565 expands the range of the calculation surface 830 corresponding to the high temperature range 810 - R1 in the thickness direction by the amount corresponding to two of grid 600 and expands the range of the calculation surface 830 corresponding to the low temperature range 810 - R2 by the amount corresponding to one of grid 600. Thus, an evaluation region 700 is generated as illustrated in FIG. 10(b). In FIG. 10(b), the grid 600 expanded corresponding to the high temperature range 810 - R1 is illustrated by broken lines. In this case, the expansion degree of the calculation surface 830 with respect to the temperature may be settable by the user.

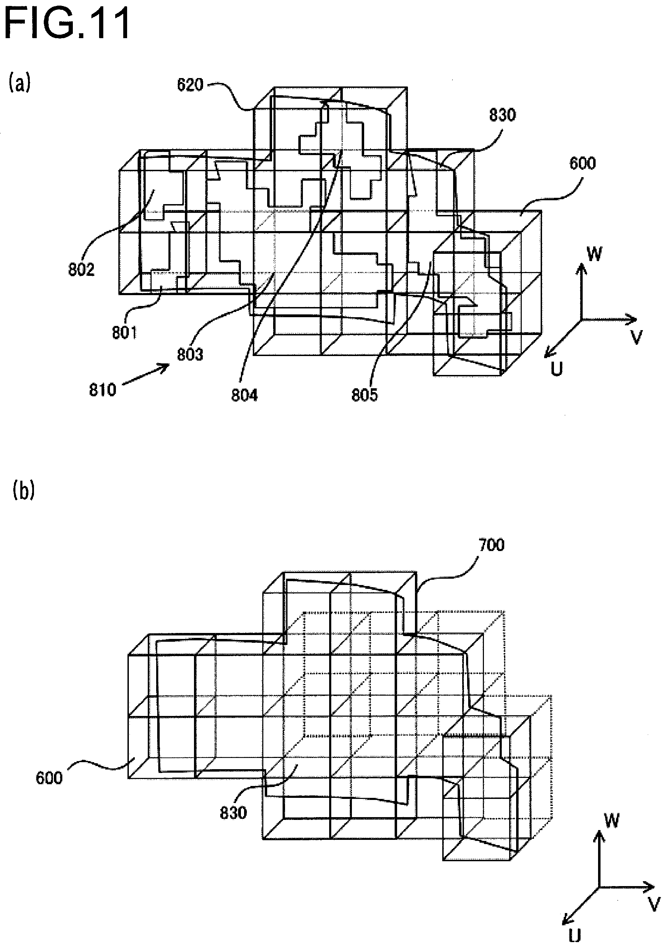

Further, the evaluation region setting unit 565 may generate the evaluation region 700 by changing the expansion degree from the calculation surface 830 based on the area degree of the surface risk region information. FIG. 11(a) schematically illustrates grouped surface risk region 810 and calculation surface 830 in this case. In this case, it is configured that the area of the surface risk region 803 and the area of the surface risk region 805 included in the grouped surface risk region 810 exceed the predetermined value. The evaluation region setting unit 565 deeply expands the calculation surface 830 toward the inside of the specimen S with respect to the surface risk regions 803 and 805, and shallowly expands the calculation surface 830 toward the inside of the specimen S with respect to the other surface risk regions 801, 802, and 804. For example, the evaluation region setting unit 565 generates the evaluation region 700 as illustrated in FIG. 11(b), by representing the range of the calculation surface 830 corresponding to the surface risk regions 803, 805 by two of the grid 600 in the thickness direction, and by representing the calculation surface 830 corresponding to the surface risk regions 801, 802, and 804 by one of the grid 600. Note that, in FIG. 11(b), the grid 600 expanded corresponding to the surface risk regions 803, 805 is illustrated by broken lines.

Note that, in the above description, the processing for the surface risk region 810 on the surface of the site P1 has been described, but the same processing is performed also for the surface risk region 820 on the surface of the site P2 to set the evaluation region 700.

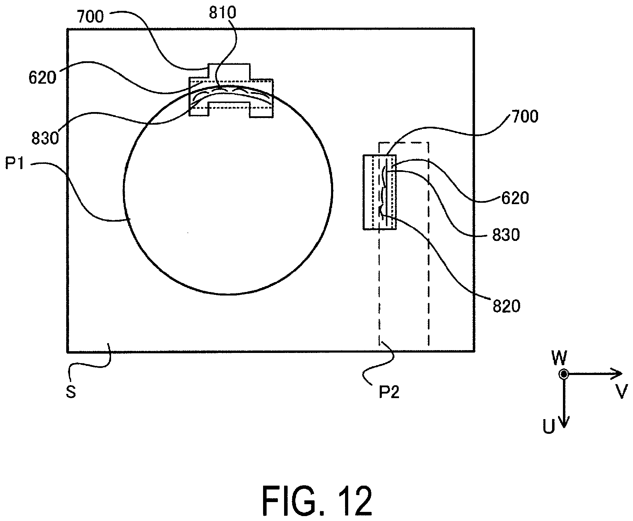

FIG. 12 schematically illustrates the positional relationship between the surface risk regions 810 and 820, the effective interesting region 820, the calculation surface 830, and the evaluation region 700. Note that, for the convenience of illustration, the calculation surface 830 is expressed shifted from the surfaces of the sites P1, P2. The attribute information and ID are attached to the evaluation region 700 set in this way and stored in the data accumulation unit 58. The attribute information is information indicating an attribute for which the evaluation region 700 is set, and as in the example illustrated in FIG. 12, is a machined surface or an oil passage, for example. The ID is information for identifying the evaluation region 700, and is, for example, a number, an alphabet, or the like.

Further, the expansion rate at the time of expanding the calculation surface 830 is not constant, and the expansion rate (magnification) may be changed based on the shape of the test object S, for example, by the evaluation region setting unit 565. As described above, it is often the concave portion of the specimen S corresponding to the convex portion of the mold, in which the seizure is likely to occur. The evaluation region setting unit 565 may generate the evaluation region 700 by increasing the expansion rate for the calculation surface 830 in which the surface shape of the specimen S is derived in the concave portion and representing it with two of the grid 600 in the thickness direction for example, and representing the calculation surface 830 in the convex portion by one of the grid 600 in the thickness direction.

In the above explanation, although that the calculation surface generation unit 563 generates the effective interesting region 620 based on the surface risk regions 810 and 820 has been described, the present invention is not limited to this case. For example, the calculation surface generation unit 563 may generate the effective interesting region 620 based on the operation of the user on the GUI. In this case, while viewing the design information such as CAD displayed on a display monitor 6 and the like, the user designates a desired plurality of positions using the input operation unit 11 such as a mouse (not illustrated). The calculation surface generation unit 563 is configured to be the range surrounded by a plurality of positions input based on the operation of the user as the effective interesting region 620. The calculation surface generation unit 563 may derive the calculation surface 830 based on the effective interesting region 620 and the surface shape of the specimen S expressed by design information such as CAD. Further, the evaluation region setting unit 565 may determine the amount or direction of expansion upon generating the evaluation region 700 by expanding the calculation surface 830 based on the operation of the user. Also in this case, the user may designate the amount or the direction to be expanded using the input operation unit 11 such as the mouse (not illustrated). This makes it possible to generate an evaluation region for a risk region based on experience. Note that, the processing of the evaluation region setting unit 565 described above may be performed on the actual data in addition to being performed on the surface shape model data expressed by design information such as CAD.

2-3. Case for Setting Evaluation Region Based on Internal Risk Region

The evaluation region setting unit 565 generates an evaluation region based on the internal risk region included in the risk region information set by the risk region information setting unit 562, that is, shrinkage cavity, gas cavity, solidification time, internal stress, or the like. The evaluation region generated in this case can be used for comparing the risk region where cavities and the like obtained by the casting simulation and the like occur and the measurement result actually obtained by the x-ray inspection apparatus 100. By the result of the casting simulation and the like, one result can be obtained in a case where calculation conditions are determined. However, in actual casting, even if it is manufactured under the same conditions, there are differences in the occurrences of cavities and the like, thus it is necessary to evaluate the casting considering such variations. For that purpose, it is necessary to fix the evaluation region and to measure and verify a plurality of the actual casting by the x-ray inspection apparatus 100. Also, the prediction accuracy of the casting simulation is not 100%. Even if the prediction accuracy is about 80%, there is a demand to further improve the prediction accuracy. For this reason, it is necessary to evaluate by comparing the actual data obtained by actual measurement with the x-ray inspection apparatus 100 and the data obtained by the calculation.

In order to use it for comparative verification with the calculation data by the casting simulation as described above, in the present embodiment, the evaluation region is generated based on the internal risk region.

In the present embodiment, paying attention to whether a plurality of the internal risk regions are randomly distributed without regularity, and the presence or absence of a shape tendency, the evaluation region is set by that the scattered internal risk regions are combined based on the operation by the user. In this case, the surface shape of the specimen S and the internal risk region input from the surface information acquisition unit 561 are superimposed and displayed on the display monitor 6, and the user may designate the desired range from the input operation unit 11 as a GUI. The evaluation region setting unit 565 generates an evaluation region represented by the grids 600 so as to surround the range designated by the user.

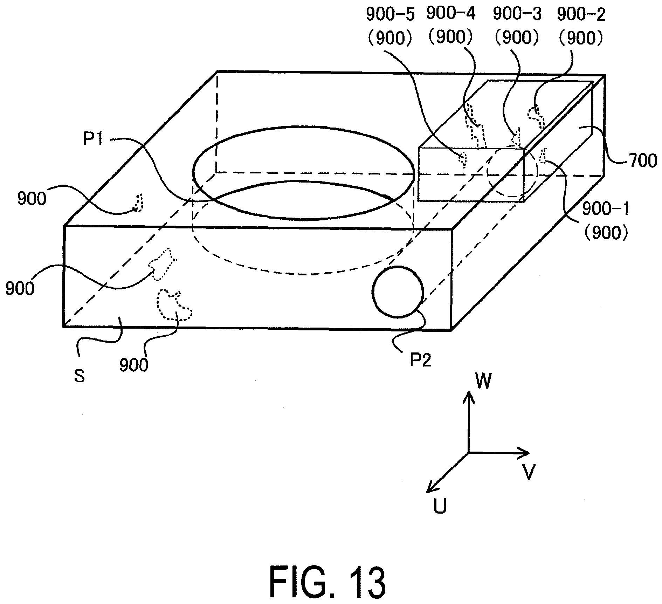

FIG. 13 is a figure schematically illustrating the internal risk region 900 scattered inside the specimen S. Upon the user designates the internal risk regions 900-1 to 900-5 illustrated in FIG. 13 on the display monitor 6, the evaluation region setting unit 565 generates the range surrounding the internal risk regions 900-1 to 900-5 as the evaluation region 700. In this case, basic shapes such as a rectangular parallelepiped, a circle, a cylinder, a torus, and the like, are stored as templates in the data accumulation unit 58 in advance, and in the case where the user designates the template, the evaluation region 700 may be generated based on the designated template.

The evaluation region setting unit 565 assigns the attributes and IDs to the evaluation region 700 generated based on the internal risk region and stores them in the data accumulation unit 58. Attributes are information for classifying the internal risk regions and is, for example, information about a name of a shrinkage cavities risk region, a stress risk region, and the like. The ID is information for identifying the evaluation region 700, and is, for example, a number, an alphabet, or the like. Note that, the information relating to the internal risk region is not limited to that the predicted occurrence position information of the cavities is drawn on the surface shape model data of the specimen S based on the position information obtained from the casting simulation. On the other hand of identifying the position of the cavity from the actual data of the specimen S, by position matching the actual data and the surface shape model data obtained from the design information such as CAD on a computer, the cavity position information is superimposed by the surface shape model data from the CAD, and the internal risk region from the superimposed information may be set.

3. Evaluation Region Editing Processing

In the evaluation region 700 automatically generated as described above, since a plurality of the evaluation regions 700 are separated from each other, there is a possibility that the risk region is out of consideration or a flow path which is easily to leak through the cavities and the like empirically is out of consideration. In addition, in a case where the same parts are attached to different locations on the specimen S, in the design information, surfaces of these parts are different, so different evaluation regions 700 may be generated. For example, in a case where there are plurality of bolt holes for attaching the bolt, the area around the bolt hole which is the fastening portion and the threaded portion are the evaluation region 700, but the evaluation region 700 should be formed between a plurality of the bolt holes from the viewpoint of leakage and fastening strength.

From the viewpoint described above, it is preferable to further improve the accuracy of the evaluation region 700 by performing connecting and the like with respect to a plurality of the evaluation regions 700 generated. For this purpose, in the present embodiment, the evaluation region editing unit 566 performs editing processing with respect to the evaluation region 700. The editing process will be described in detail below.

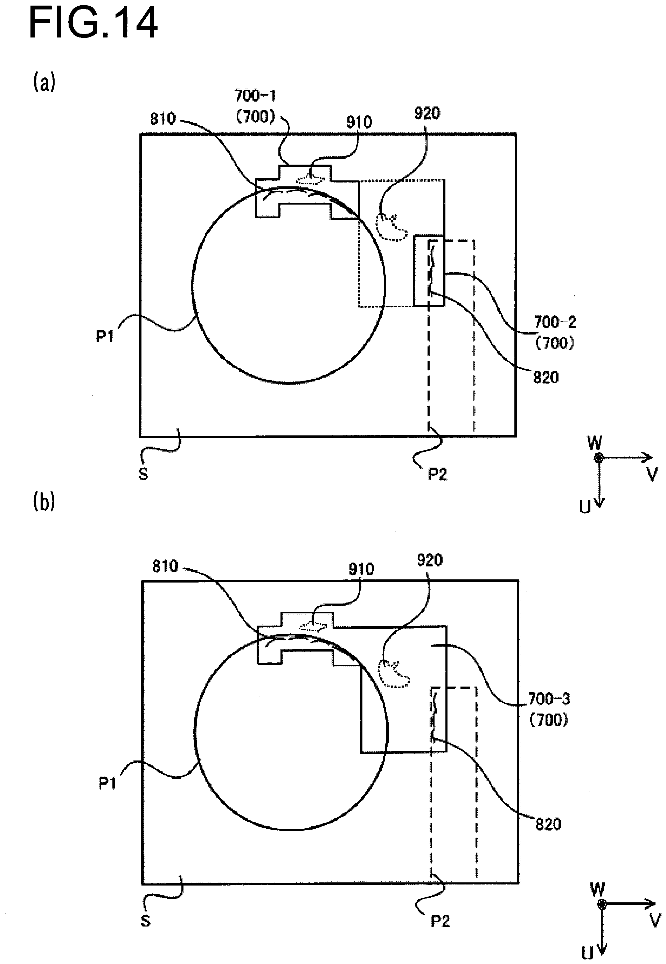

FIG. 14(a) is a figure schematically illustrating the evaluation region 700 generated with respect to the specimen S by the evaluation region setting unit 565. The evaluation region 700-1 generated with respect to the surface risk region 810 at the site P1 of specimen S and the evaluation region 700-2 generated with respect to the surface risk region 820 at the site P2 is illustrated as the evaluation region 700. A risk factor 910 such as the cavity existing in the vicinity of the surface risk region 810 and a risk factor 920 such as the cavity between the evaluation region 700-1 and the evaluation region 700-2 exist in this specimen S.

Since the risk factor 910 is included in the evaluation region 700-1 generated for the site P1, it is configured as an inspection target. However, since the risk factor 920 is included in neither the evaluation region 700-1 nor the evaluation region 700-2, it is not configured as an inspection target. Since the evaluation region 700-1 and the evaluation region 700-2 are generated close to each other, if the evaluation region 700 is defined as a wide range connecting the evaluation region 700-1 and the evaluation region 700-2, the risk factor 920 can also be the inspection target. Since the site P2 is the oil passage, the risk factor 920 may cause leakage and should be the inspection target. That is, since the site P2 is considered as a caution-required portion from the attribute of the evaluation region 700-2, it is preferable to enlarge the evaluation region 700-2 to the range (complemented region) illustrated by the broken lines in the figure.

In a case where the distance between the individual evaluation regions 700 is within a predetermined distance, the evaluation region editing unit 566 concatenates these evaluation regions 700 to generate one new evaluation region 700. For example, for the bolt fastening portion, if the bolt holes are within a predetermined distance, the evaluation region editing unit 566 connects evaluation regions 700 to each other evaluation region 700 to generate one evaluation region 700. Further, based on the attributes assigned to the evaluation region 700, the evaluation region editing unit 566 increases the degree of expansion and the degree of linkage of the evaluation region 700 based on the importance of the important site. That is, the evaluation region editing unit 566 enlarges the size of the evaluation region 700 having a high importance degree of the important site, and connects the evaluation region 700 with other evaluation region 700 generated at a position exceeding the predetermined distance. In the example illustrated in FIG. 14(a) described above, since the importance degree of the site P2 which is the oil passage is high, the evaluation region editing unit 566 increases the degree of expansion of the evaluation region 700-2 and connects it to the evaluation region 700-1. Thus, the evaluation region editing unit 566 generates a new evaluation region 700-3 as illustrated in FIG. 14(b). Note that, in order to perform such an operation, in the evaluation region editing unit 566, the surface element object data or the surface region to be a cavity may be derived from the actual data in light of a determination of the user's estimation or a predetermined criterion, and a portion surrounded by such surface element object data or the surface region may be recognized as a cavity. Note that, as a method for deriving the surface element object data or the surface region to be a cavity, for example, known method such as deriving difference data with surface information intended by a producer such as CAD data from the surface shape model data obtained from the actual data can be adopted.

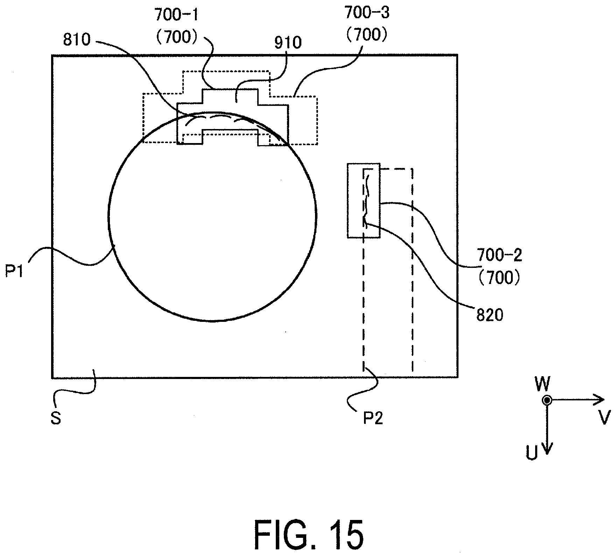

Note that, in a case where searching the evaluation regions 700 connectable to each other, the evaluation region editing unit 566 may be performed from the evaluation region 700 along the surface shape of the specimen S or in the direction in which the internal structure exists, based on the surface shape included in the design information. That is, if the evaluation region editing unit 566 enlarges the evaluation region 700 in the air outside the specimen S, number of the grids 600 increases, the load amount to be searched for the cavities increases, and waste time occurs in the evaluation analysis time. As an example, FIG. 15 schematically illustrates the case of enlarging the evaluation region 700-1 (see FIG. 14(a)) set at the site P1. In FIG. 15, the evaluation region 700-1 is generated by the evaluation region setting unit 565, and the evaluation region 700-3 illustrated by the broken lines corresponds to the region generated by which the evaluation region 700-1 was enlarged.

Note that the connected evaluation regions 700 is not necessarily limited to those that connect the evaluation regions 700 formed after setting the calculation surface 830, the evaluation region 700 set by the user may be connected to the other evaluation region 700, if the condition for connecting is satisfied.

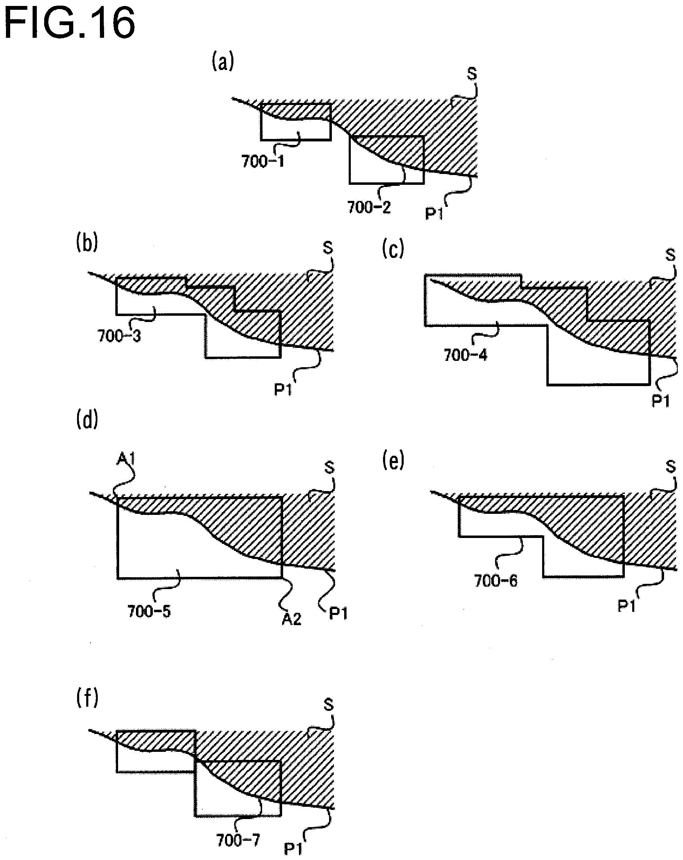

FIG. 16 illustrates partially enlarged views schematically illustrating an example of a method of connecting and enlarging the evaluation region 700 by the evaluation region editing unit 566. Note that, FIG. 16 is a figure illustrating the cross section of the specimen S, and hatched areas in FIG. 16 illustrate that they are inside the surfaces illustrating the shape of the specimen S. FIG. 16(a) illustrates two evaluation regions 700-1 and 700-2 generated on the surface of a certain site P1. In a case where the evaluation region editing unit 566 connects the evaluation regions 700-1 and 700-2 in FIG. 16(a), it performs connecting along the surface of the site P1 as described above. FIG. 16(b) schematically illustrates a new evaluation region 700-3 generated by connecting. In this way, the surface of the site P1 sandwiched between the evaluation regions 700-1 and 700-2 can also be included in the evaluation region 700-3.

In a case where the site P1 is an important site, the evaluation region editing part 566 may enlarge the evaluation region 700-3 generated by concatenating as illustrated in FIG. 16(b). FIG. 16(c) schematically illustrates the evaluation region 700-4 in which the evaluation region 700-3 is enlarged. As a result, the area to be an inspection target of the important site can be enlarged while suppressing the ratio of the external space of the specimen S to be included in the evaluation region 700-4.

Further, the evaluation region editing unit 566 may generate a new evaluation region 700-5 as illustrated in FIG. 16(d) based on the evaluation region 700-1 and the evaluation region 700-2 as illustrated in FIG. 16(a). In this case, the evaluation region editing unit 566 generates an evaluation region 700-5 so that a diagonal line of the evaluation region 700-5 with a vertex A1 farthest from the evaluation region 700-2 within the evaluation region 700-1 and a vertex A2 farthest from the evaluation region 700-1 within the evaluation region 700-2 being formed. However, this evaluation region 700-5 includes a lot of space outside the site P1. Therefore, the evaluation region editing unit 566 may eliminate the space outside the site P1 from the evaluation region 700-5 so as to be the evaluation region 700-6 as illustrated in FIG. 16(e).

Also, the evaluation region editing unit 566 may enlarge the evaluation region 700-1 and the evaluation region 700-2, respectively, to generate the connected evaluation region 700-7 as illustrated in FIG. 16(f).

Further, for example, there is a possibility that different evaluation regions 700 are generated despite the fact that the flow path through which the oil and the like flows is known from the design information. Even in such a case, the evaluation region editing unit 566 performs editing processing. In the leak test, for example, the amount of leakage is determined by feeding air from one side of the flow path and measuring the flow amount of air flowing out from the other one side, and determined as a failure in a case where the leakage amount exceeds the specified amount. The flow path is not limited to one direction, and there are also complicated shapes such as lateral holes, vertical holes, oblique holes, from diagonal holes to a crank journal, and the like. In the case where the leak test is performed on such a flow path, the evaluation region 700 may be generated so as to coincide with the flow path using the actual data from the X-ray inspection apparatus 100.

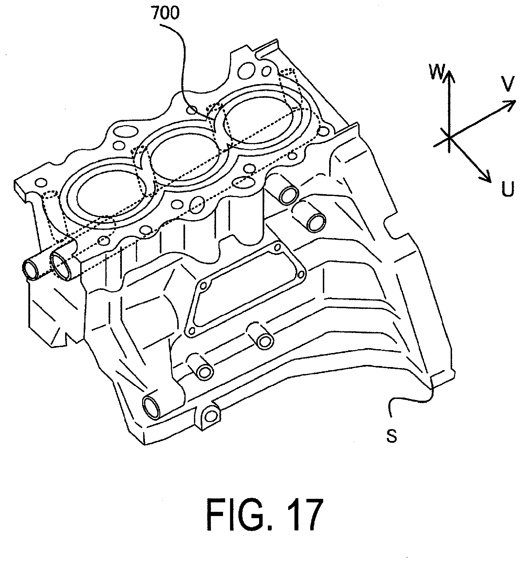

FIG. 17 illustrates a case where the evaluation region 700 is generated by the editing processing along the oil passage as described above. Thus, the evaluation region 700 (broken lines portion in FIG. 17) matching with the oil passage is generated, so that the important site can be reliably set as the inspection target.

In the case where the surface of the specimen S coincides with the surface of the casting, there may be a case where distinct evaluation regions 700 are automatically generated. In this case, the evaluation region editing unit 566 does not perform the above-described enlargement, connection and the like, and keeps each evaluation region 700 distinguished based on the attribute.

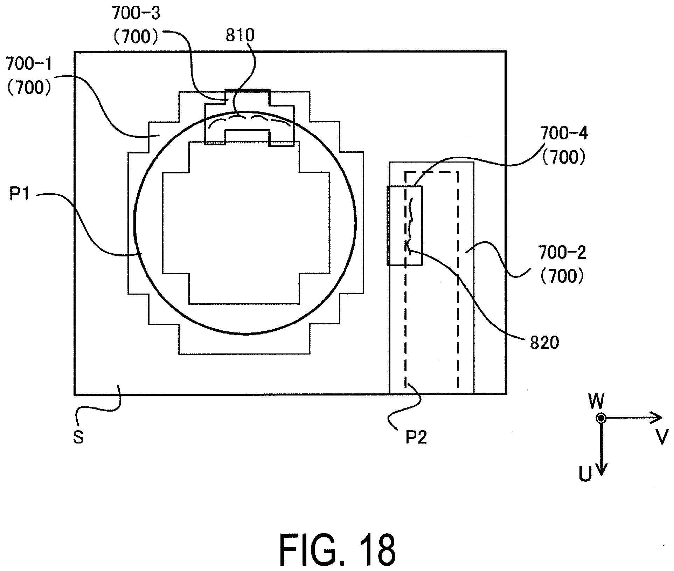

FIG. 18 is a figure schematically illustrating a case where evaluation regions 700 respectively having different attribute overlap. In FIG. 18, it is configured that the evaluation regions 700-1 and 700-2 are respectively set based on the important part information in the sites P1 and P2, and the evaluation regions 700-3 and 700-4 are respectively set in the surface risk regions of the sites P1 and P2. The evaluation regions 700-1 and 700-3 set in the site P1 overlap and the evaluation regions 700-2 and 700-4 set in the site P2 overlap. The attributes respectively assigned to the evaluation regions 700-1 and 700-3 are different from each other, and the attributes respectively assigned to the evaluation regions 700-2 and 700-4 are different from each other. In this case, since the risk degrees can be determined based on the attributes upon performing the risk degree determination processing to be described later, the evaluation region editing unit 566 keeps the distinct evaluation areas 700 respectively with different attributes overlap.

In addition, there are cases where the result of actual measurement determination by the leak test and the like does not match with the actual measurement result actually measured by the x-ray inspection apparatus 100. In the specimen S, even if there are portions that are different machined surface or portions respectively mounted different parts, due to the design of the casting method, with respect to molten metal flow and solidification phenomenon at the casting, there are portions where temperature/cooling process are the same to each other. The evaluation region editing unit 566 may set the same evaluation regions 700 for such portions.

Note that, in a case where the number of the grids 600 of the new evaluation region 700 generated by enlarging or connecting the evaluation region 700 as described above exceeds the predetermined number, the evaluation region editing unit 566 does not perform editing processing. That is, in a case where the number of the grids 600 representing the evaluation region 700 exceeds the predetermined number, it is expected that the load required for various processes will become too large, the evaluation region editing unit 566 does not enlarge or concatenate the evaluation area 700. Note that, in a case where the number of the grids 600 representing the evaluation region 700 generated by the evaluation region setting unit 565 exceeds a predetermined number, the evaluation region editing unit 566 may divide the generated evaluation region 700 into a plurality of the evaluation regions 700. Note that, the predetermined number of the grids 600 is a value set based on a test and the like, from the viewpoint of processing load and processing time, and it is assumed that it is stored in advance in the data accumulation unit 58. Further, the predetermined number of the grids 600 can be set from the viewpoint of suppressing inclusion of a region which is not the target of evaluation as the evaluation region 700 increases, from the viewpoint of maintaining the detection precision of defects at a high level.

4. Clustering Processing

Clustering processing for clustering the cavities and the like scattered inside the evaluation region 700 created as described above will be described. In this case, based on the investigation result information acquired by the investigation result information input unit 567 and the evaluation region generated or edited respectively by the evaluation region setting unit 565 or the evaluation region editing unit 566, the clustering unit 568 clusters the cavities and the like scattered in the evaluation region 700 as the inspection results. As described above, the design information including the surface element object data such as the CAD and the actual data as the investigation results are position matched, and the position of the risk factor such as the internal cavity of the specimen S included in the inspection result information is represented in the coordinate system set in the design information. In the common position space in which the actual data obtained by the actual measurement by the x-ray inspection apparatus 100 and the evaluation region 700 are position matched, the clustering unit 568 clusters the cavities and the like on the actual data in unit of the grid 600.

Note that, for the position matching, the investigation results information input unit 567 sets the evaluation region by the evaluation region setting unit 565 or the evaluation region editing unit 566 to the actual data obtained by the actual measurement by the x-ray inspection apparatus 100, based on the design information including the surface element object data such as CAD or the information relating to the internal structure such as the casting simulation. In addition, the investigation result information input unit 567 sets grids for the actual data and forms the surface shape model data of the specimen S by polygonization. The investigation result information input unit 567 may set the evaluation region 700 based on the surface shape model data.

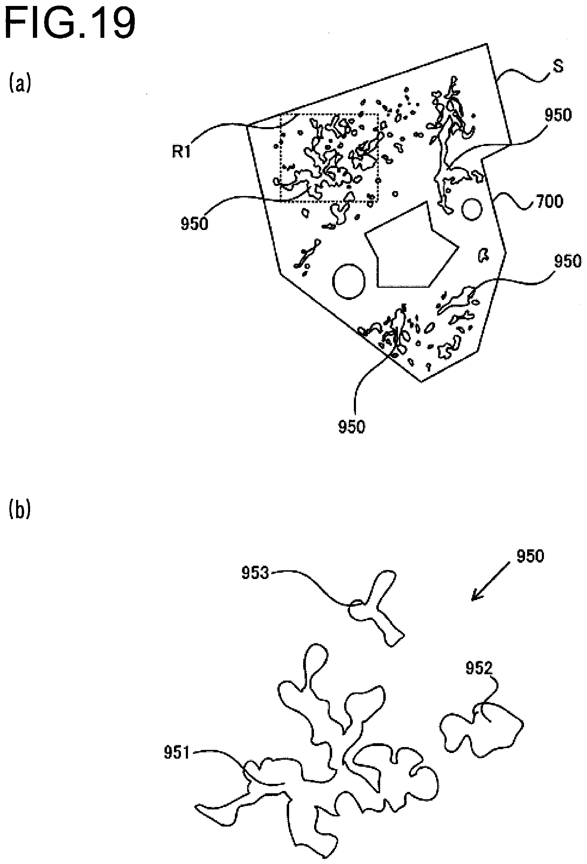

FIG. 19 is a figure illustrating a state in which plurality of the cavities derived from actual data obtained by actual measurement in a certain evaluation region 700 are interspersed. Note that, in FIG. 19, the cavity is illustrated as an example of a risk factor. Hereinafter, it will be described as a risk factor 950, but the risk factor is not limited only to the cavity. Note that, in FIG. 19(a), the number of the risk factors 950 such as the cavity is limited for the convenience of illustration, but in a case where the resolution of the x-ray inspection apparatus 100 improves and a smaller cavity or the like can be detected, the number of risk factors 950 such as these cavities increases more than the example illustrated in the figure. Further, for the convenience of illustration, in FIG. 19, the evaluation region 700 is illustrated by omitting the grids 600. The clustering unit 568 performs processing so as to recognize cavities and the like located close to each other among the risk factors 950 such as cavities having many numbers as one defect site, that is a cluster in order to determine the degree of danger for each cluster recognized as a defect site by post-processing.

The clustering unit 568 sets the value which is changeably setting as a cluster threshold, and bundles the risk factors 950, such as two cavities below the cluster threshold into one cluster. In the present embodiment, the cluster threshold is a distance between the risk factors 950 such as two cavities, and can be set to 1 mm, for example. That is, the clustering unit 568 sets the risk factors 950 such as the cavities having the inter-cavity distance of 1 mm or less to one cluster. Note that, the distance between cavities is the distance between the outer circumference of a risk factor 950 such as a certain cavity and the outer circumference of a risk factor 950 such as another cavity.

FIG. 19(b) is an enlarged view of a region R1 surrounded by broken lines in FIG. 19(a). The clustering unit 568 sets risk factors 951 and 952 such as a cavities having an inter-cavity distance of 1 mm or less as one cluster and does not set as one cluster as the risk factors 951 and 953 such as a cavities whose inter-cavity distance exceeds 1 mm. Note that, the clustering unit 568 may calculate the inter-cavity distances in order from the risk factor 950 such as a large cavity (in the example of FIG. 19(b), the risk factor such as the risk factor 951) and the risk factor 950 such as the surrounding cavity. As the size of the risk factor 950 such as the cavity decreases, the number of risk factors 950 such as the small cavity exponentially increases. In such state, upon processing is performed from a risk factor 950 such as a small cavity and the like, the amount of data to be processed increases and the processing time increases. Therefore, by performing the processing from the risk factor 950 such as a large cavity, an increase in the amount of data to be processed and an increase in processing time can be prevented.

In a case where there is even one risk factor 950 such as another cavity below the cluster threshold for the risk factor 950 such as the target cavity, the clustering unit 568 sets a flag 1 indicating a cluster which can be clustered with respect to the grid 600 that expresses a risk factor 950 such as the target cavity. In a case where there is no risk factor 950 such as another cavity below the cluster threshold for the risk factor 950 such as the target cavity, the clustering unit 568 expresses the risk factor 950 such as the target cavity, the flag 0 is set to the grid 600 to be used. The clustering unit 568 generates clusters by combining the grids 600 to which the flag 1 are attached.

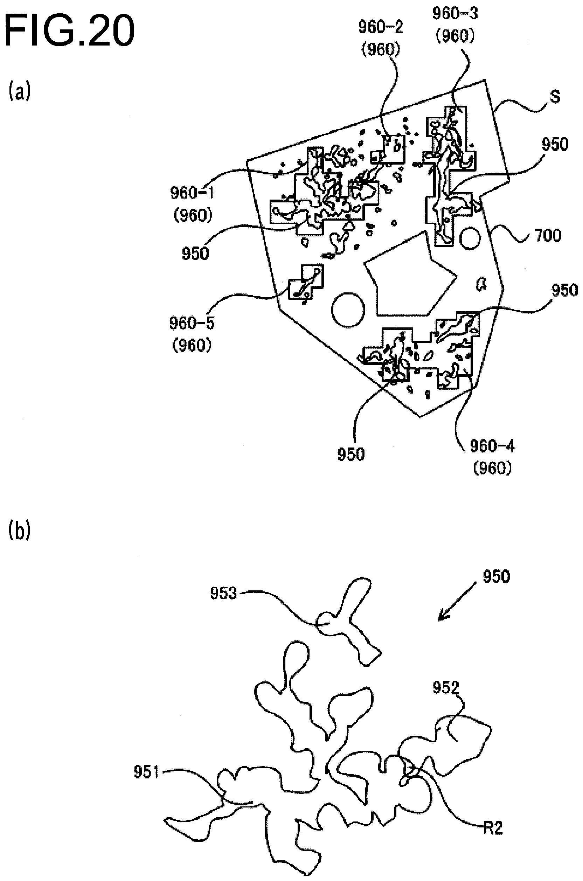

FIG. 20(a) is a figure schematically illustrating the generated cluster 960 performing the above processing on the risk factor 950 such as the cavity in the evaluation region 700 illustrated in FIG. 19(a). FIG. 20(a) illustrates a case where five clusters 960-1 to 960-5 are generated. The clustering unit 568 sets an ID to each of the clusters 960-1 to 960-5 and stores them in the data accumulation unit 58. In this case, the clustering unit 568 sets numbers 1 to 5 for example as IDs to the clusters 960-1 to 960-5, respectively. The clustering unit 568 similarly performs clustering processing with respect to the risk factors 950 such as cavities of the other evaluation regions 700.

Note that, in the above description, the cluster threshold is set as the inter-cavity distance, but the present invention is not limited to this example. For example, the expansion distance of the cavities may be used as the cluster threshold. The expansion distance of the cavity is the distance by which the outer circumference of the risk factor 950 such as the cavity is expanded. For example, in a case where the expansion distance of the cavity is 0.5 mm as the cluster threshold, the clustering unit 568 expands the outer circumference of the risk factor 950 such as the cavity by 0.5 mm. FIG. 20(b) illustrates a case where the circumference of each of the risk factors 951, 952, 953 such as the cavities illustrated in FIG. 19(b) is expanded by 0.5 mm. As illustrated in FIG. 20(b), the risk factor 951 such as the cavity and the risk factor 952 such as the cavity partially overlap with each other and the overlapped area R2 is generated. In the case where the risk factor 950 such as the cavity to be the target is expanded, in the case where even one overlapping risk factor 950 such as the cavity exists, the risk factor 950 such as a cavity equal to or less than a cluster threshold is regarded as a risk factor 950, and a flag of a grid 600 representing a risk factor 950 such as the target cavity is set to 1. Further, in FIG. 20, there is no overlap between the risk factors 951 and 953 of the cavity illustrated. In such a case, the clustering unit 568 considers that it is a risk factor 950 such as a cavity exceeding the cluster threshold, and attaches a flag 0 to the grid 600 expressing the risk factor 950 such as the target cavity. In addition, after setting the size of the grid 600 to a value smaller than the cluster threshold, even in a case where the distance between the grid 600 in which at least a part of the cavities exists and the grid 600 in which at least a part of the other cavities exists is a cluster threshold, one cluster may be generated. Also, the cluster threshold used at this time may be set on a grid unit.

The clustering unit 568 performs indexing processing to index the risk degree for using the cluster 960 created as described above for risk degree determination to be described later. The clustering unit 568 quantifies the risk degree of the cluster 960 in, for example, five stages based on the situation of the risk factor 950 such as the cavity inside the cluster 960. The clustering unit 568, for example, gives a large numerical value (cluster index) to the cluster 960 having a high risk degree. For example, the clustering unit 568 numerically expresses the degree of the danger of the overall cluster 960 from the average inter-cavity distance within the cluster 960, the number of cavities below the cluster threshold, the ratio of the total volume of cavities 950 to the volume of the cluster 960 (average volume ratio), the shape of the risk factor 950 such as cavity, and the like.

The average inter-cavity distance is an average value of a plurality of the inter-cavity distances in the cluster 960, and the smaller the value, the more a plurality of cavities 950 and the like inside the cluster 960 are in proximity. The number of cavities below the cluster threshold becomes larger in a case where the risk factors 950, for example, fine cavities such as porosities are densely distributed. In such a case, risk factors 950 such as a plurality of cavities may be connected in the cluster 960. The average volume ratio is a value obtained by dividing the total volume of the risk factor 950 such as the cavity in the cluster 960 by the volume of the cluster 960. A larger this value indicates that the more risk factors 950 such as cavities are generated in the cluster 960. Particularly, in a case where the sizes of the risk factors 950 such as the cavities are small, the occurrence frequency is also high, so there is a possibility that the cavities below the resolution of the x-ray inspection apparatus 100 exist. With respect to the shape of the risk factor 950 such as the cavity in the cluster 960, the shrinkage cavity and the gas cavity are distinguished and indexed by the shape characteristic number of the acute angle part (for example, the aspect ratio of the cavity contour shape).

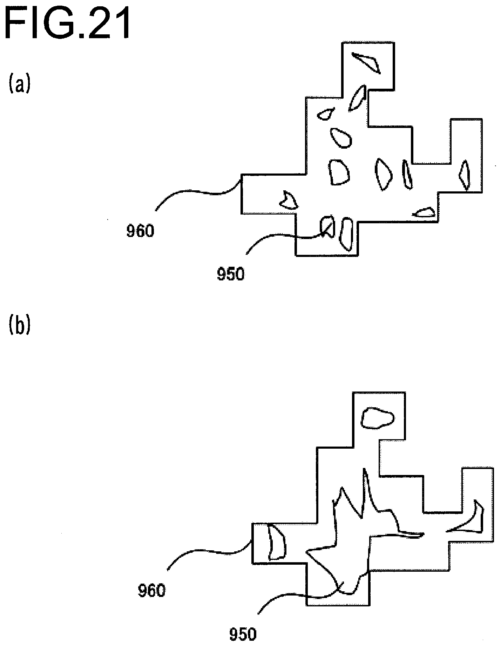

With FIG. 21(a) and FIG. 21(b), an indexing processing by the clustering unit 568 will be described. FIG. 21(a) illustrates an example in which large number of risk factors 950 such as small cavities are densely distributed in the cluster 960, and FIG. 21(b) illustrates an example in which small number of risk factors 950 such as relatively large cavities are scattered. In the example of FIG. 21(a), there are large number of cavities below the cluster threshold, and in the example of FIG. 21(b), there are small number of cavities below the cluster threshold. In the example of FIG. 21(a) where there is large number of cavities below the cluster threshold, as described above, there is a possibility that risk factors 950 such as a plurality of the cavities in the cluster 960 are connected. In the example illustrated in FIG. 21(a) and FIG. 21(b), the average value of a plurality of the inter-cavity distances in the cluster 960 are approximately the same. In the example of FIG. 21(a), since the risk factors 950 such as a small cavity are densely distributed, the average volume ratio is small, and in the example of FIG. 21(b), the risk factors 950 such as large cavities are scattered, so that the average volume ratio is large. The clustering unit 568 determines that the risk degree of the cluster 960 illustrated in FIG. 21(a) having the above characteristics is high, and gives 5 as the cluster index. The clustering unit 568 determines that the risk degree of the cluster 960 illustrated in FIG. 21(b) having the above characteristics is relatively low, and gives 2 as the cluster index.

Next, the risk degree determination processing performed by the defect evaluation device 1, that is, the quality evaluation processing will be described.

The x-ray inspection apparatus 100 according to the present embodiment determines the risk degree of the cluster 960 generated by the clustering unit 568 for each of the evaluation regions 700 generated as described above. In this case, the evaluation of the positional relationship and the determination of the risk degree are performed by the evaluation unit 57 of the defect evaluation device 1.

As illustrated in FIG. 2, the evaluation unit 57 has an evaluation region inspection unit 571 and a risk degree determination unit 572 as functions. The evaluation region inspection unit 571 calculates the positional relationship between the cluster 960 and the surface of the test specimen S. The risk degree determination unit 572 determines the risk degree of the cluster 960 based on the positional relationship calculated by the evaluation region inspection unit 571.

First, the process of calculating the positional relationship by the evaluation region inspection unit 571 will be described. The evaluation region inspection unit 571 performs the processing, based on the cluster 960 generated by the clustering unit 568, the evaluation region 700 edited by the evaluation region editing unit 566, and the surface (for example, the calculation surface 830 or the machined surface) of the specimen S and the position information.

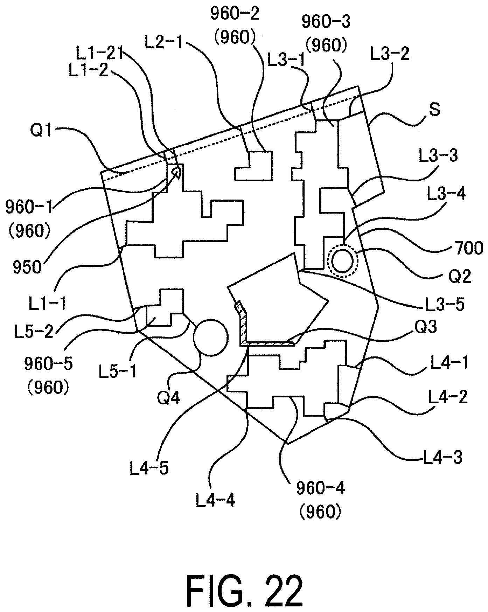

FIG. 22 schematically illustrates the relationship between the cluster 960, the evaluation region 700, and the surface of the specimen S. The evaluation region 700 and the clusters 960-1 to 960-5 are the same as the case illustrated in FIG. 20(a). In FIG. 22, surfaces Q1 and Q2 are machined surfaces, range Q3 is a part where seizure is likely to occur based on surface risk region information, and surface Q4 is a surface of a part to be fastened.

The evaluation region inspection unit 571 derives the evaluation targets between the surfaces and each clusters 960-1 to 960-5. At this time, the evaluation region inspection unit 571 treats areas between the clusters 960-1 to 960-5 and the surface, at which distances between the clusters 960-1 to 960-5 and the surface are equal to or less than the a calculation threshold value. In FIG. X + 13, the evaluation targets for cluster 960-1 are illustrated as L1-1 and LI-2, the evaluation target for cluster 960-2 is illustrated as L2-1, the evaluation targets for cluster 960-3 are illustrated as L3-1, L3-2, L3-3, L3-4, and L3-5, the evaluation targets for the cluster 960-4 are illustrated as L4-1, L4-2, L4-3, L4-4, L4-5 and evaluation targets for the cluster 960-5 are illustrated as L5-1 and L5-2. Note that, in the example illustrated in FIG. 22, the evaluation region inspection unit 571 derives the evaluation target based on the distance between the boundary of the cluster 960 and the surface, but also may derive the evaluation target based on the distance between the boundary of the risk factors 950 such as cavities being close to the surface in the cluster 960 and the surface. For example, the evaluation region inspection unit 571 may derive the evaluation target LI-21 in place of the evaluation target LI-2 based on the distance between the boundary of the cavity 950 and the like included in the cluster 960-1 and the surface. In this case, it is preferable that the distance to the surface becomes more accurate.

The risk degree determination unit 572 compares the magnitude relation between the distance of the evaluation target derived as described above and a determination threshold value. Note that the determination threshold value is set to a value smaller than the above-described calculation threshold value. The risk degree determination unit 572 determines that the risk degree is high for the cluster 960 from which the evaluation target having a distance smaller than the determination threshold value is derived.

Note that the determination threshold value described above is an adjustable value. For example, in a case where the determination result of the risk degree using the determination threshold value does not match the actual operation, that is, in a case where the number of times of the determination of risk is excessively large or excessively small, the determination threshold value is adjusted. In a case where the number of times of the determination of risk is excessively large, the risk degree determination unit 572 resets the value of the determination threshold value to a smaller value, and then performs determination processing again. In a case where the determination threshold value of 2 mm, for example, is reset to 1 mm, it is determined that the cluster 960 positioned 1.5 mm from the surface is not dangerous. On the other hand, in a case where number of times of the determination of risk is excessively small, the risk degree determination unit 572 resets the value of the determination threshold value to a larger value, and then performs the determination process again. In a case where the determination threshold value of 2 mm, for example, is reset to 3 mm, it is determined that the cluster 960 positioned 2.5 mm from the surface is dangerous. Note that, in a case where adjusting the determination threshold value to a larger value, the risk degree determination unit 572 sets the value to a value less than the calculation threshold value (for example, 5 mm). The reason why two threshold values of the determination threshold value and the calculation threshold value are provided as described above is that because a calculation result is once obtained as the calculation threshold value (for example, 5 mm), it is easy to change the determination threshold value and to trial the determination result so as to match the actual operation.

The risk degree determination unit 572 determines the risk degree based on the distance of the evaluation target derived by the evaluation region inspection unit 571 and the distance set based on the attribute of the surface to be the end point of the evaluation target for each cluster 960. In this case, even in a case where the distances of the derived evaluation target are equal, the risk degree determination unit 572 makes the evaluation of the risk degree different in a case where the attributes of the surface to be the end point are different. For example, the risk degree determination unit 572 determines that the risk degree of the evaluation target with the end point where the attribute of the surface is machined surface is higher than the risk degree of the evaluation target with the end point where the attribute of the surface is dense layer. In addition, in a case where the surface of the end point of an evaluation target is the important site, the risk degree determination section 572 determines that the risk degree of the evaluation target is high.

For example, in the example illustrated in FIG. 22, the risk degree determination unit 572 determines that the risk degrees of the evaluation targets LI-2 and L3-1 derived for the clusters 960-1 and 960-3 is high, because the end points surfaces of these evaluation targets are machined surface Q1 where the dense layer has been removed. The risk degree determination unit 572 determines that the risk degree of the evaluation target L3-4 for the cluster 960-3 is high, because the end point of surface of this evaluation target is machined surface Q2 where the dense layer has been removed and is also an oil passage. Further, there is a possibility that leakage may occur from the machined surface of which is the end point of the evaluation target L3-1 of this cluster 960-3. Therefore, the risk degree determination unit 572 determines that the risk degree of the evaluation target L3-4 is highest. As described above, leakage is a problem in the flow path, thus, in a case where the surface is an oil passage, it is necessary to take into consideration also the entrance and the exit of the flow path, in determining the risk degree. The risk degree determination unit 572 determines that the risk degree of the evaluation target L4-5 for the cluster 960-4 is high, because the end point of surface of this evaluation target is a range Q3 in which seizure may occur, and is not a healthy state. The risk degree determination unit 572 determines that the risk degree of the evaluation target L5-2 for the cluster 960-5 is high, because the end point of surface of this evaluation target is a surface Q4 that is a portion to be fastened, and there is a possibility of break if force is applied by fastening.

Note that, the risk degree determination unit 572 performs a different determination of the risk degree based on, in addition to the distance information regarding from the surface of the cavity closest to the surface of the specimen S in the cluster 960 to the surface of the specimen S to be the end point, information regarding a depth of the machining margin set on the surface of the specimen S to be the end point.

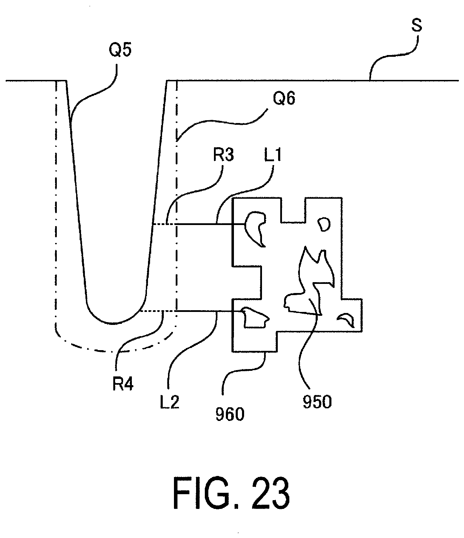

FIG. 23 schematically illustrates the relationship between the distance between the cluster 960 and the surface and the depth of the machining margin. In FIG. 23, the surface of the hole initially formed by the core pin is illustrated by Q5, the surface formed by machining the surface Q5 is represented by Q 6, and the evaluation target for the cluster 960 is represented by L-1 and L-2. The distances to the surface Q6 of the evaluation targets L-1 and L-2 are set to be equal. Also, the machining margin at the position where the evaluation target L-1 was derived is R3, and the machining margin at the position where the evaluation target L-2 is derived is R4. The machining margin R4 at the position where the evaluation target L-2 is derived is larger than the machining margin R3 at the position where the evaluation target L-1 is derived. In a case that the surface machining margin is large, plenty volume of dense layer will be cut, so the risk degree is higher than in a case that the machining margin is small. That is, the risk degree determination unit 572 determines that the evaluation target L-2 has a higher risk degree than the evaluation target L-1, even if the evaluation target L-1 and the evaluation target L-2 having the same distance to the surface Q 5 as the processing surface.

The risk degree determination unit 572 uses Expressions (1) and (2) below to determine the risk degree in accordance with the above concept. Expression (1) is a determination expression in the case where the surface is not an oil passage, and Expression (2) is a determination expression in the case where the surface is an oil passage.

$$x = (\text{cluster index} \times \text{number of evaluation targets} \times \text{size of machining margin} \times$$
$$\text{surface degree value}) / \text{distance of the evaluation target} \cdots (1)$$

$$x = \{(\text{cluster index} \times \text{number of evaluation target} \times \text{size of machining margin} \times$$
$$\text{surface degree value}) / \text{distance of evaluation target}\} \times \text{coefficient} \cdots (2)$$

Note that, the surface degree value is a value indexed based on the attributes of the surface, and is digitized and represented, for example, in 5 stages, such as 4 for seizure, 3 for machined surface and 2 for fastening portion or the like. Since Expression (2) is use for an oil passage and is a target to a leak test, weighting is performed to the Expression (1) from this point of view.

By using Expressions (1) and (2) described above, a criteria for determining quality evaluation is set in accordance with a combination the attribute assigned to each surface of the actual data and the attribute assigned to the cluster 960.

The risk degree determining unit 572 determines the risk degree of each cluster 960 based on whether the value obtained by the above Expressions (1) or (2) exceeds a predetermined determination threshold value. That is, the risk degree determination unit 572 determines that it is dangerous in a case where the value obtained by Expressions (1) or (2) is greater than the determination threshold value, and determines that it is not dangerous in a case where the value obtained by Expression (1) or (2) is less than or equal to the determination threshold value. Note that, this determination threshold value is smaller than the calculation threshold value used for deriving the above-described evaluation target.

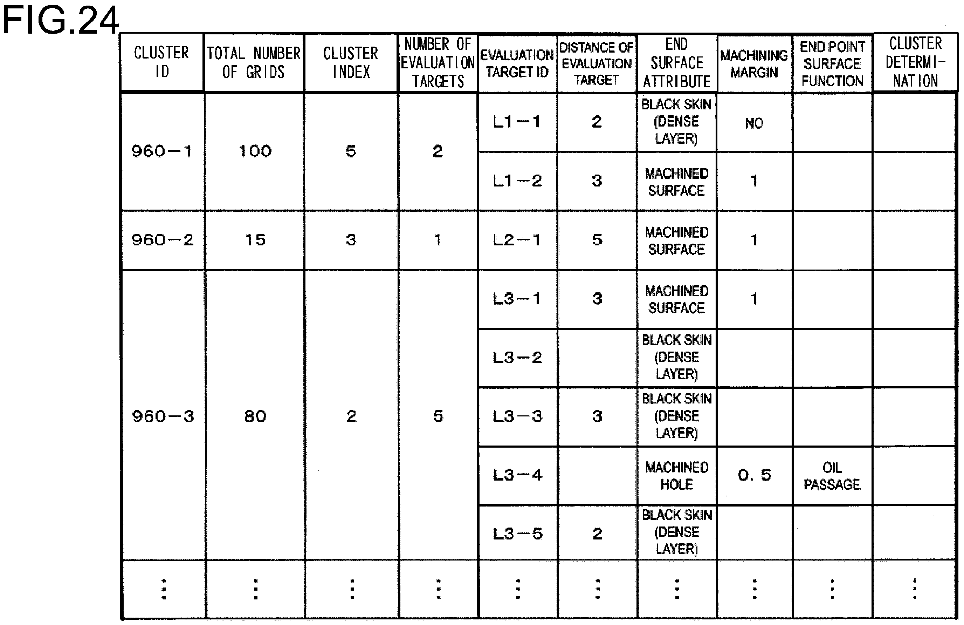

FIG. 24 illustrates an example in which each index used in the risk degree determination unit 572 for determining the risk degree and the determination result in a table format. Note that, In FIG. 24, the cluster ID and the evaluation target ID are respectively expressed by using the reference numerals attached to the clusters and the evaluation targets. The determination result performed by the risk degree determination unit 572 based on Expressions (1) or (2) may be input in the column for cluster determination in FIG. 24.

The above determination result is displayed on the display monitor 6. In this case, the display monitor 6 may display evaluation targets in a color-coded manner based on the determination result together with the cluster 960 which is the evaluation target.

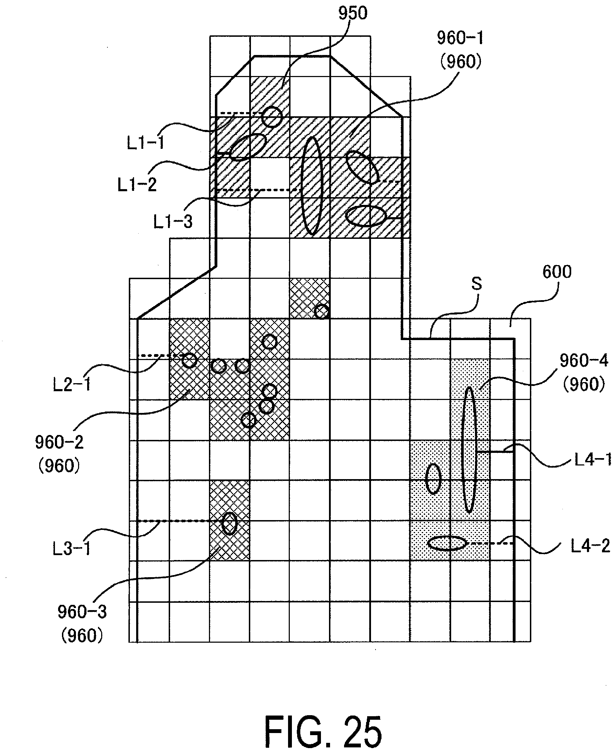

FIG. 25 schematically illustrates an example of the determination result displayed on the display monitor 6. On the display monitor 6, an evaluation region 700 expressed in unit of the grid 600, a risk factor 950 such as a cavity, a cluster 960, and an evaluation target are displayed. FIG. 25 illustrates, as an example, the result of risk degree determination with respect to four clusters 960-1 to 960-4. It is configured that five evaluation targets L1-1 to L1-5 are derived in the cluster 960-1, evaluation targets L2-1 and L3-1 are derived in the clusters 960-2 and 960-3, respectively, and two evaluation targets L4-1 and L4-2 are derived in the cluster 960-4. It is configured that among the evaluation targets L1-1 to L1-5 of the cluster 960-1, the evaluation targets L1-2 and L1-5 are equal to or less than the determination threshold value. Similarly, among the evaluation targets L4-1 and L4-2 of the cluster 960-4, it is configured that the evaluation target L4-2 is equal to or less than the determination threshold value. For other evaluation targets, it is configured that it is larger than the determination threshold value and less than the calculation threshold value.

The display monitor 6 displays the evaluation target equal to or less than the determination threshold value and the evaluation target larger than the determination threshold value and equal to or less than the calculation threshold value in a color-coded. In this case, the display monitor 6 displays the evaluation targets L1-2 and L1-5 of the cluster 960-1 and the evaluation target L4-2 of the cluster 960-4, for example, in red, and other evaluation targets in blue. Note that, in FIG. 25, for convenience of illustration, it is configured that the evaluation targets L1-2, L1-5, and L4-2 are represented by solid lines and other evaluation targets are represented by broken lines, and are illustrated for displaying in color-coded.

Note that, different threshold value may be set in accordance with the attribute information of the surface for determining the distance to the defect position. Further, different determination threshold values may be set in accordance with the state of the defect at the defect position for determining the distance to a certain surface.

The display monitor 6 displays in a color-coded manner based on the risk degree of the cluster 960. In the example of FIG. 25, as can be seen from the fact that the evaluation targets LI-2 and LI-5 determined to be dangerous are derived, the cluster 960-1 is a group of the risk factors 950 located in the vicinity of the two surfaces constituting the specimen S as described above. The cluster 960-4 is a group of risk factors 950 located in the vicinity of one surface of the specimen S, as can be seen from the fact that the evaluation target L4-2 determined as dangerous is derived. Further, as can be seen from the fact that the evaluation targets L2-1 and L3-1 which are not determined to be danger are derived respectively, the clusters 960-2 and 960-3 are a group of risk factors 950 separated from the surface of the specimen S by a certain distance or longer. In such a case, the display monitor 6 displays the grid 600 in the cluster 960-1 positioned in the vicinity of a plurality of surfaces, for example, in red, the grid 600 in the cluster 960-4 located in the vicinity of one surface, for example, yellow, the grid 600 inside the clusters 960-2 and 960-3 which are separated from the surface in a certain distance, for example, blue. Note that, in FIG. 25, the grid 600 inside the cluster 960-1 is hatched, the grid 600 inside the cluster 960-4 is attached by dots, and the grid inside the clusters 960-2 and 960-3 is attached by lattice-like pattern for illustrating them in color-code.

In addition, the display monitor 6 can also display the surface color-coded based on the attribute information of the surface of the specimen S. In addition, the display monitor 6 can also display the evaluation region 700 color-coded based on the determination result of the risk degree. In a case where it is determined that the risk degree is high, the display monitor 6 displays the evaluation region 700 in red, for example, and in a case where it is determined that the risk degree is not high, the display monitor 6 displays the evaluation region 700 in blue. As described above, based on the distance information between the surface and the risk factor formed to achieve the function expected of the specimen S, the risk degree determination can be performed and the risk region can be display on the model data of the specimen S in an easy to understand manner.

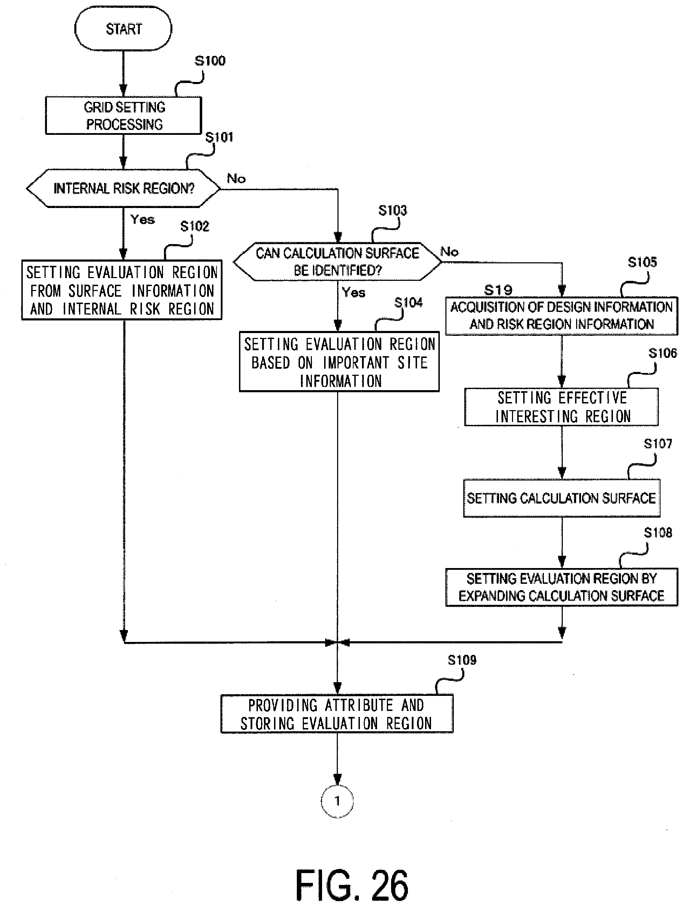

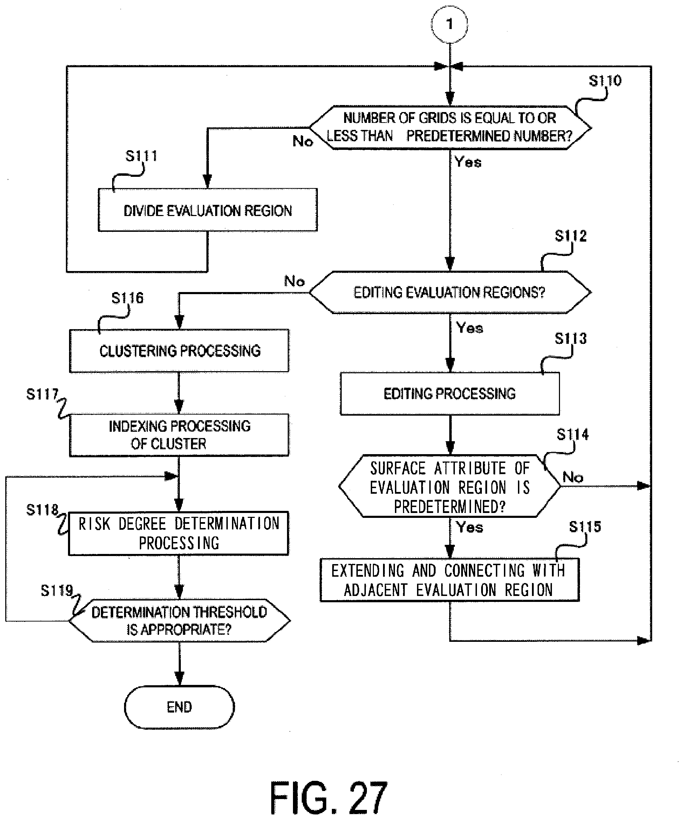

With reference to the flowcharts of FIG. 26 and FIG. 27, processing performed by the defect evaluation device 1 will be described. The program for executing each processing illustrated in the flowchart of FIG. 26 and FIG. 27 is stored in the data accumulation unit 58, is read out by the defect evaluation device 1, and is executed.

In step S100 of FIG. 26, the grid 600 is set by the grid setting unit 564, and the process proceeds to step S101. In step S101, it is determined whether the risk region information or the important site information exists inside the surface (internal structure) of the surface of the specimen S. That is, it is determined whether the internal risk region information is present. In the case that it is the inside of the surface of the specimen S, that is, the internal risk region information, an affirmative decision is made in step S101 and the process proceeds to step S102. In step S102, the evaluation region setting unit 565 sets the evaluation region 700 from the surface information and the internal risk region information, and proceeds to step S109 described later. In a case where it is not the internal risk region information, a negative determination is made in step S101 the process then proceeds to step S103.

In step S103, it is determined whether the calculation surface 830 can be specified. In a case where the calculation surface 830 can be specified, that is, in a case where it is the important surface information, the determination in step S103 is affirmative and the process proceeds to step S104. In step S104, the evaluation region setting unit 565 sets the evaluation region 700 on the surface based on the important site information, and proceeds to step S109 described later.

In the case where the calculation surface 830 cannot be specified, that is, in the case where it is the surface risk region information, a negative decision is made in step S103 and the process proceeds to step S105. In step S105, design information and risk region information are acquired, and the process proceeds to step S106. In step S106, the evaluation region setting unit 565 sets the effective interesting region 620 and proceeds to step S107. In step S107, the calculation surface generation unit 563 sets the calculation surface 830 in the effective interesting region 620, and the process proceeds to step S108. In step S108, the evaluation region setting unit 565 sets the evaluation region 700 by expanding the calculation surface 820 to the inside of the specimen S, and the process proceeds to step S109. In step S109, attribute information is configured to the set evaluation region 700, and the process proceeds to step S110 in FIG. 27.

In step S110, the evaluation region editing unit 566 determines whether the number of grids 600 representing the evaluation region 700 is less than or equal to a predetermined number. In a case where the number is not less than the predetermined number, a negative determination is made in step S110, and the process proceeds to step Sill. In step Sill, the evaluation region editing unit 566 divides the evaluation region 700 and returns to step S110. In a case where the number of the grids 600 is equal to or less than the predetermined number, an affirmative determination is made in step S110, and the process proceeds to step S112. By suppressing the number of grids 600 for expressing the evaluation region 700 equal to or less than a predetermined number by the processing in steps S110 and S111, it is possible to prevent increasing in the processing time for processing the evaluation region 700. Further, it is also possible to prevent increasing in the evaluation region 700 increases so as to suppress that a region not to be evaluated is included, and to maintain the defect detection precision at a high level.

In step S112, it is determined whether to edit the evaluation region 700. In a case where editing the evaluation region 700 is needed to be performed, an affirmative decision is made in step S112 and the process proceeds to step S113, in a case where the evaluation region 700 is not needed to be edited, a negative decision is made in step S112, and the process proceeds to step S116 to be described later. In step S113, the evaluation region editing unit 566 performs editing processing on the evaluation region 700, and the process proceeds to step S114. In step S114, it is determined whether the attribute of the evaluation region 700 is a predetermined one, for example, an oil passage or a screw hole. In a case where the attribute of the evaluation region 700 is a predetermined one, an affirmative determination is made in step S114, and the process proceeds to step S115. In a case where the attribute of the evaluation region 700 is not predetermined, a negative decision is made in step S114 and the process returns to step S110. In step S115, the evaluation region editing unit 566 extends the evaluation region 700, and connects it with the adjacent evaluation region 700, and returns to step S110.

In a case where a negative decision is made in step S112, the clustering unit 568 performs clustering processing in step S116 and proceeds to step S117. In step S117, the clustering unit 568 performs indexing processing on the cluster 960 and proceeds to step S118. In step S118, the risk degree determination unit 572 of the evaluation unit 57 performs the risk degree determination process for each cluster 960 in the evaluation region 700, and the process proceeds to step S119. Through the procedure, the determination result obtained by the risk degree determination processing is displayed on the display monitor 6. In step S119, it is determined whether the determination threshold value is appropriate. In a case where the determination threshold value is appropriate, an affirmative determination is made in step S119 and the process is terminated. In a case where the determination threshold value is not appropriate, a negative decision is made in step S119, the determination threshold value is adjusted, and the processing returns to step S118 and the risk degree determination process is performed again.

According to the first embodiment described above, the following advantageous effects are achieved.

(1) In the inspection control unit 56 of the defect evaluation device 1, the calculation surface generation unit 563 derives the calculation surface 830 from the surface of a part of the surface shape of the specimen S based on the surface risk region information, and the evaluation region setting unit 565 sets the evaluation region 700 based on the calculation surface 830. Thus, different from an important site, the portion of the specimen S that cannot be identified can be a target of inspection or evaluation of the risk degree.

(2) The calculation surface generation unit 563 sets the effective interesting region 620 with respect to the position where a plurality of the surface risk regions are grouped and a range surrounded by the effective interesting region 620 in the portion of the specimen S is derived as the calculation surface 830. Thus, the evaluation region 700 can be set by setting the surface of the specimen S based on the surface risk region.

(3) The evaluation region setting unit 565 sets the evaluation region 700 by extending from the calculation surface 830 as starting point toward the inside of the specimen S. Thereby, it is possible to set the surface of the portion of the test specimen S and the vicinity set as targets for risk degree determination and evaluation without setting of the evaluation region 700 in the space outside the specimen S.

(4) The evaluation region setting unit 565 sets the evaluation region 700 by extending the calculation surface 830 toward the inside of the specimen S in a predetermined distance. Thus, the surface of the part and the vicinity thereof of the specimen S can be a target for inspecting or evaluating the risk degree.

(5) The evaluation region setting unit 565 sets a predetermined distance based on the attribute information of the part including the calculation surface 830. Thus, what extent the depth from the surface of the part of the specimen S should be a target for inspecting or evaluating can be decided, based on the degree of importance degree of the part from which the calculation surface 830 is derived.

(6) The evaluation region setting unit 565 sets a distance for extending the calculation surface 830 based on the distance information to the surface of the portion facing the calculation surface 830. Thus, in a case where the thickness of the portion from which the calculation surface 830 is derived is thin, the evaluation region 700 can be set so that the surface of the portion facing the calculation surface 830 is also included.

(7) The evaluation region setting unit 565 sets the distance by which the calculation surface 830 is expanded based on the aspect ratio of the convex portion and the concave portion of the calculation surface 830, that is, the degree of concavity and convexity. Thereby, it is possible to set the evaluation region 700 in consideration of the state of a risk depending on the degree of concavity and convexity (for example, a concave portion is easily to be influenced by seizure).

(8) The evaluation region setting unit 565 sets the distance of expansion from the calculation plane 830 to the direction in which the internal structure of the specimen S exists based on the defect estimation information in regard to the defect estimated in the internal structure of the specimen S. Thus, the greater the risk degree, the deeper the position from the surface of the specimen S can be a target for inspection or evaluation, based on the risk degree of the surface risk region information, such as temperature.

(9) The evaluation region setting unit 565 sets the distance as the calculation surface 830 is expanded based on the calculation surface 830, that is, the area of the surface risk region. Thus, there is a possibility that the large surface risk region exists from the surface of the specimen S to a deep position, so that such a surface risk region can be a target to inspection and evaluation.

(10) In a case where a plurality of the effective regions of interest 620 are set in the same portion of the subject S, the calculation surface generation part 563 derives the calculation surface 830 for each of the effective interesting regions 620, the evaluation region setting unit 565 sets the evaluation region 700 for each of a plurality of the calculation surfaces 830. Thereby, in a case where the positions where the surface risk region of the same part is distributed far away, the evaluation region 700 can be set for each surface risk region, and the surface risk region can be included in the target for inspection or evaluation while excluding an unnecessary region for inspection or evaluation.

(11) The configuration information acquisition unit 55 acquires the surface shape information indicating the surface shape of the specimen S and the internal risk region information relating to the position of the defect estimated to occur in the specimen S. The calculation surface generation unit 563 derives a predetermined area including the position of the estimated defect along the surface shape of the specimen S as the calculation surface 830. The evaluation region setting unit 565 sets the evaluation region 700 by expanding the calculation surface 830 in the direction intersecting with the direction along the surface shape in the internal structure of the specimen S. Thus, different from an important site, the portion of the specimen S that cannot be identified the surface can be the target of inspection or evaluation of the risk degree.

(12) The clustering unit 568 sets the evaluation region 700 in the space of the actual data in a state where the evaluation region 700 is positionally matched with the actual data based on the data obtained by actually measuring the specimen S, and identifies a defect location in the evaluation region 700 in the space of the actual data. Thus, since the coordinate system of the design information can be applied to the actual data to specify the defect location, the convenience is improved.

(13) The clustering unit 568 derives the specified defect location by the unit of the grid 600, and in the case that there are a plurality of grids 600, a cluster 960, which is a grid group, is generated by combining a plurality of the grids 600 based on the positional relationship of the identified defect locations or the positional relationship of the derived grids 600. Thus, it is possible to determine the risk degree in a state where a plurality of the risk factors 950 are grouped in the form of the grid 600.

(14) For each cluster 960, the risk degree determination unit 572 calculates the distance information between the defect location included in the cluster 960 and the actual surface area including the surface represented by the actual data, and determines the risk degree based on the calculated distance information. Thus, the risk degree of the risk factor 950 located in the vicinity of the actual surface of the specimen S having a possibility to cause leaks, breaks, and the like, can be determined to be high.

(15) The risk degree determination unit 572 includes information indicating a minimum distance among the respective distance information from a plurality of the risk factors 950 located in the cluster 960 to the actual surface region including the surface represented by the actual data. Thus, the determination of the risk degree can be performed with respect to the risk factor 950 that is located near the actual surface and is likely to cause leakage, breakage, or the like.

(16) The risk degree determination unit 572 includes distance information from an arbitrary defect location located in the cluster 950 for each surface represented in the actual data, as the distance information used in performing the quality evaluation. Thereby, it is possible to evaluate the risk factor 950 in which the risk degree is low with respect to certain actual surface of the specimen S but the risk degree is high with respect to the other actual surface of the specimen S without leaking.

(17) The risk degree determining unit 572 determines the quality evaluation based on the evaluation criteria set based on the attribute information set for each surface of the distance information from each of a plurality of the surfaces to any one of the risk factors 950 existing in the cluster 960. In general, the state of the surface of the specimen S, for example, even if the risk factor 950 at the machined surface and the risk factor 950 at the dense layer are located at the same distance from the surface of the specimen S, the risk degree thereof are different to ach other. In the present embodiment, since the risk degree is determined using the distance information based on the state of the surface of the specimen S, it is possible to improve the determination accuracy.

(18) The evaluation region editing unit 566 sets a new evaluation region including the evaluation region 700 and the complementary region, by setting the three-dimensional space between the evaluation regions 700 as a complementary region to be a target for inspection or evaluation, based on the mutual distance information of a plurality of the evaluation regions 700 set by the evaluation region setting unit 565. Thus, the risk factor 920 that is not included in the evaluation region 700 set by the evaluation region setting unit 565 can be a target for inspection or evaluation.

(19) The evaluation area editing unit 566 determines whether to set the complementary region based on similarity information indicating the similarity of the change in the appearance frequency of the defect with respect to the change in the casting condition. Thus, in terms of the design of the casting method, a portion that undergoes the same temperature/cooling process can be grouped into one evaluation region 700 from the viewpoint of fluidity of molten metal and the phenomenon of solidification..

(20) The evaluation region editing unit 566 determines whether to set the complementary region based on the presence or absence of a surface including a part of a plurality of evaluation regions 700 among the surfaces that the specimens S constitutes. Thus, the same type of flow paths can be grouped and can be a target for inspection or evaluation without making the flow paths such as the oil passages through which oil flows into respective individual evaluation regions 700.

(21)The evaluation region setting unit 565 sets an arbitrary position from the region where the internal structure of the specimen S exists, and sets the evaluation region 700 based on the set position. Thus, even if the portion of the specimen S cannot be identified different from the important site, it can be a target for inspection or evaluation of the risk degree.

(22) A criteria for determining the quality evaluation is set according to the combination of the attribute information given to the respective surfaces of the actual data and the attribute information given to the cluster 960. Thus, it is possible to improve the accuracy of determining the risk degree.

Second Embodiment

A structure manufacturing system according to a second embodiment will be described with reference to the drawings. The structure manufacturing system of the present embodiment creates shaped articles such as a door portion, an engine portion and a gear portion of an automobile, and an electronic component including a circuit board, for example.

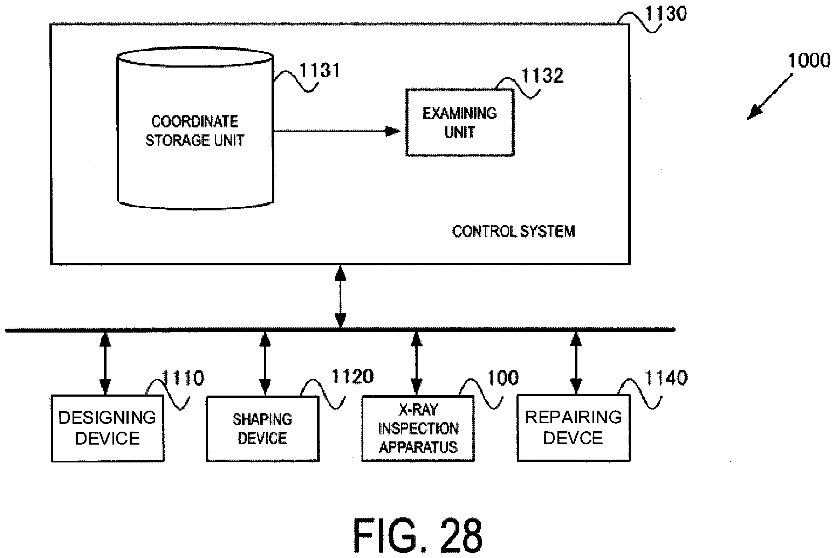

FIG. 28 is a block diagram illustrating one example of a configuration of a structure manufacturing system 1000 according to the present embodiment. The structure manufacturing system 1000 is provided with the x-ray inspection apparatus 100 described in the first embodiment or the modification, a designing device 1110, a shaping device 1120, a control system 1130, and a repairing device 1140.

The designing device 1110 is a device used by a user for creating design information relating to a shape of a structure and performs design processing of creating and storing the design information. The design information is information indicating coordinates of each position of the structure. The design information is output to the shaping device 1120 and the control system 1130 described later. The shaping device 1120 performs shaping processing of creating the structure by shaping using the design information created by the designing device 1110. In this case, the shaping device 1120 may perform at least one of a lamination process represented by a 3D printer technique, a casting process, a forging process, and a cutting process.

The x-ray inspection apparatus 100 performs measurement processing of measuring a shape of the structure shaped by the shaping device 1120. The x-ray inspection apparatus 100 outputs to the control system 1130 information indicating coordinates of the structure ("shape information" hereinafter)as a measurement result of measuring the structure. The control system 1130 is provided with a coordinate storage unit 1131 and an inspection unit 1132. The coordinate storage unit 1131 stores the design information created by the designing device 1110 described above.

The inspection unit 1132 determines whether the structure shaped by the shaping device 1120 is shaped according to the design information created by the designing device 1110. In other words, the inspection unit 1132 determines whether the shaped structure is a conforming product. In this case, the inspection unit 1132 reads the design information stored in the coordinate storage unit 1131 and performs inspection processing comparing the design information and the shape information input from the x-ray inspection apparatus 100. For the inspection processing, the inspection unit 1132 compares, for example, the coordinates indicated by the design information with the coordinates indicated by the corresponding shape information, and thus of the inspection processing, determines that the shaped structure is a conforming product shaped according to the design information in a case where the coordinates of the design information and the coordinates of the shape information match. In a case where the coordinates of the design information and the corresponding coordinates of the shape information do not match, the inspection unit 1132 determines whether a difference between the coordinates is within a predetermined range and determines that the shaped structure is a repairable defective product in a case where this difference is within the predetermined range.

In a case where the inspection unit 1132 determines that the shaped structure is a repairable defective product, the inspection unit 1132 outputs to the repairing device 1140 repair information indicating a defective portion and a repair amount. The defective portion is the coordinates of the shape information that do not match the coordinates of the design information, and the repair amount is the difference between the coordinates of the design information and the coordinates of the shape information at the defective portion. The repairing device 1140 performs repair processing of re-machining the defective portion of the structure based on the input repair information. In the repair processing, the repairing device 1140 performs again processing similar to the shaping processing performed by the shaping device 1120.

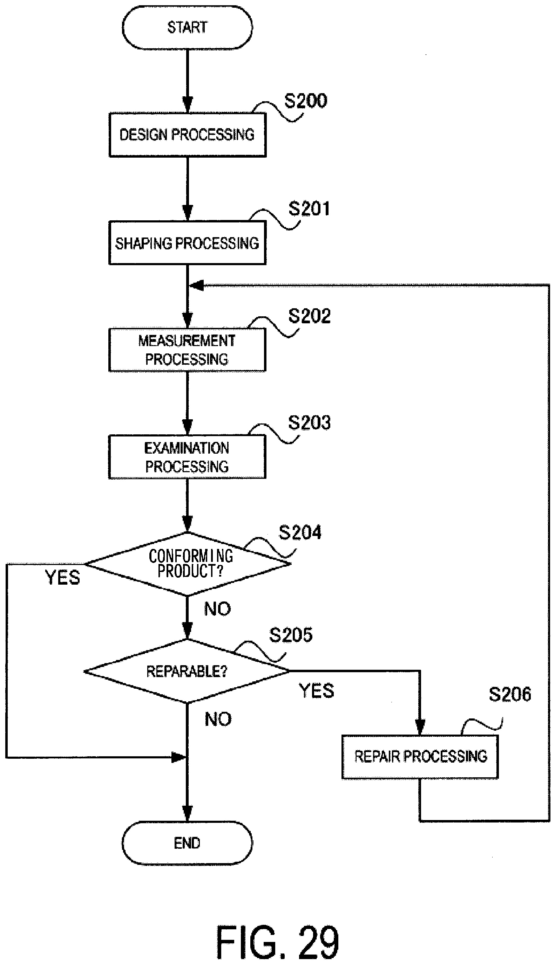

The processing performed by the structure manufacturing system 1000 is described with reference to the flowchart illustrated in FIG. 29.

In step S200, the designing device 1110 is used by the user to design the structure and the design information relating to the shape of the structure is created and stored in the design processing, and then the flow proceeds to step S201. Note that the present invention is not limited to only the design information created by the designing device 1110, in a case where design information already exists, inputting this design information to acquire the design information is also included in one aspect of the present invention. In step S201, the shaping device 1120 creates the structure by shaping based on the design information by the shaping processing; the flow then proceeds to step S202. In step S202, the x-ray inspection apparatus 100 performs the measurement processing to measure the shape of the structure and outputs the shape information; the flow then proceeds to step S203.

In step S203, the inspection unit 1132 performs the inspection processing comparing the design information created by the designing device 1110 and the shape information measured and output by the x-ray inspection apparatus 100 the flow then proceeds to step S204. In step S204, the inspection unit 1132 determines based on the result of the inspection processing whether the structure shaped by the shaping device 1120 is a conforming product. In a case where the structure is a conforming product, that is, in a case where the coordinates of the design information and the coordinates of the shape information match, an affirmative determination is made in step S204, the processing then ends. In a case where the structure is not a conforming product, that is, in a case where the coordinates of the design information and the coordinates of the shape information do not match or in a case where coordinates that are absent from the design information are detected, a negative determination is made in step S204, the flow then proceeds to step S205.

In step S205, the inspection unit 1132 determines whether the defective portion of the structure is repairable. In a case where the defective portion is not repairable, that is, in a case where the difference between the coordinates of the design information and the coordinates of the shape information exceeds the predetermined range, a negative determination is made in step S205 the processing then ends. In a case where the defective portion is repairable, that is, in a case where the difference between the coordinates of the design information and the coordinates of the shape information is within the predetermined range, an affirmative determination is made in step S205 the flow then proceeds to step S206. In this case, the inspection unit 1132 outputs the repair information to the repairing device 1140. In step S206, the repairing device 1140 performs the repair processing on the structure based on the input repair information, the flow then returns to step S202. Note that as described above, the repairing device 1140 performs again processing similar to the shaping processing performed by the shaping device 1120 in the repair processing.

According to the second embodiment described above, following advantageous effects are obtained.

(1) The x-ray inspection apparatus 100 of the structure manufacturing system 1000 performs measurement processing acquiring the shape information of the structure created by the shaping device 1120 based on the design processing of the designing device 1110, and the inspection unit 1132 of the control system 1130 performs inspection processing comparing the shape information acquired in the measurement processing and the design information created in the design processing. Therefore, inspection of a defect in the structure and information about the inside of the structure can be acquired by a nondestructive inspection to determine whether the structure is a conforming product created according to the design information, which contributes to quality control of the structure.

(2) The repairing device 1140 is configured to perform the repair processing that performs again shaping processing on the structure based on the comparison result of the inspection processing. Therefore, processing similar to the reshaping processing can be applied to the structure in a case where the defective portion of the structure is repairable, which contributes to manufacturing a structure of a high quality almost the design information.

The x-ray inspection apparatus and the defect evaluation device of the first embodiment and second embodiment described above may be modified as follows, and one or more of the modifications may be combined with the above-described first embodiment and second embodiment.

(1) The x-ray inspection apparatus 100 may have an x-ray source that emits a cone beam and a detector 4 having a structure where pixels are arranged two-dimensionally instead of a line sensor. In this case, it is favorable to output a signal from the pixels lined up of the detector 4.

(2) The shape of the grid 600 is not limited to a cube. For example, with an article of a hollow shape such as a blade site of a turbine blade, a transmission case, or a differential case, pitches of the grids 600 necessary for inspection differ in a surface direction and a thickness direction of the structure. It is not necessary to make the grid 600 very small in the surface direction. Meanwhile, it is necessary to make the pitch of the grid 600 small in the thickness direction. With such an article, it is preferable to set a grid of a rectangular-parallelepiped shape.

(3) The grid setting unit 564 sets the grid 600 in the design information such as the CAD acquired by the configuration information acquiring unit 55, but is not limited to this example. The grid setting unit 564 may perform grid setting processing based on actual measurement data, that is, voxel data, acquired by measurement by the X-ray inspection apparatus 100 input by the inspection result information input unit 567, for example. In this case, the inspection control unit 56 of the defect evaluation device 1 may have a surface information separation unit as a function for separating the surface information and the internal structure information of the specimen S from the input voxel data. The surface information separated from the voxel data is output, instead of the design information such as CAD, to the surface information acquisition unit 561.

The present invention is not limited to the embodiments described above, and various modifications may be made without departing from the spirit of the present invention. Other embodiments that embody the technical concepts of the present invention are also included within the scope of the present invention.

REFERENCE SIGNS LIST

1 Defect evaluation device

5 Control device
6 Display monitor
11 Input operation unit
55 Configuration information acquisition unit
56 Inspection control unit
57 Evaluation unit
58 Data accumulation unit
560 Important site setting unit
561 Surface information acquisition unit
562 Risk region information setting unit
563 Calculation surface generation unit
564 Grid setting unit
565 Evaluation region setting unit
566 Evaluation region editing unit
567 Inspection results information input unit
568 Clustering unit
571 Evaluation region inspection unit
572 Risk degree determination unit
1000 Structure manufacturing system
1110 Designing device
1130 Control system
1132 Inspection unit

**Claims**

1. A setting method for setting at least a part of a region in which a structure of a specimen exists as a target region, for an evaluation of an internal structure of the specimen, comprising:

   setting an arbitrary position from the region in which the structure of the specimen exists; and
   setting the target region based on the set position.

2. The setting method according to claim 1, wherein
   the target region is set from the position toward a direction in which the structure of the specimen exists.

3. A setting method for setting a target region for an evaluation of an internal structure of a specimen, comprising:

   acquiring position information including a plurality of positions with respect to the specimen;
   deriving a surface region from surface element object data, representing at least a part of a surface in surface shape model data indicating a surface shape of the specimen, by setting surface boundary position information indicating a boundary of a region of a part of the surface element object data to the surface element object data, based on the position information; and
   setting the target region based on the surface region.

4. The setting method according to claim 3, wherein
   the position information is information indicating a position related to a plurality of defects estimated to occur on the surface or inside of the specimen.

5. The setting method according to claim 3 or 4, further comprising:

   grouping the position information under a predetermined condition;
   generating group boundary position information with respect to each of the grouped position information; and
   setting a coverage surrounded by the group boundary position information in the surface element object data as the surface boundary position information.

6. The setting method according to claim 3 or 4, wherein
   the target region is set by setting the target region from the surface region toward the inside of the specimen.

**7.** The setting method according to claim 6, wherein
the target region is set by setting the surface region to a predetermined distance from the surface region toward the inside of the specimen.

**8.** The setting method according to claim 7, wherein
the predetermined distance is set based on the attribute information attached to the surface element object data including the surface region.

**9.** The setting method according to claim 7, wherein
the predetermined distance is set based on attribute information attached to the surface element object data including the surface of the specimen opposed to the surface region or distance information from the surface region to the surface of the specimen opposed to the surface region.

**10.** The setting method according to claim 9, wherein
the predetermined distance is set based on an aspect ratio of a convex portion or a recessed portion of the surface region.

**11.** The setting method according to claim 3, wherein
a predetermined distance is set based on defect estimation information relating to defect estimated in the internal structure of the specimen in a direction in which the surface region is expanded.

**12.** The setting method according to claim 7, wherein
the predetermined distance is set based on an area of the surface region.

**13.** The setting method according to claim 5, wherein

the surface boundary position information with respect to the surface element object data is set respectively and a plurality of the surface regions are derived for each of the group boundary position information, in a case where a plurality of the group boundary position information exist in the same surface element object data, and the target region is set for each of the plurality of the surface regions.

**14.** An inspection method for identifying a defect location, comprising:
setting the target region in a space of actual data that is based on data obtained by actually measuring the specimen in a state where the target region set in the setting method according to any one of claims 1 to 13 is positionally matched with the actual data, and identifying the defect location within the target region in the space of the actual data.,

**15.** The inspection method according to claim 14, wherein
the target region is represented by using a unit lattice.

**16.** The inspection method according to claim 15, further comprising:

deriving the unit lattice including the defect location identified; and
generating a unit lattice group by collecting the defect location or the derived unit lattice, in a case where a plurality of the unit lattices are derived, based on a positional relationship of the identified defect locations or the positional relationship of the derived unit lattices.

**17.** The inspection method according to claim 16, further comprising:

calculating distance information between the defect location included in the unit lattice group and an actual surface region including a surface represented by the actual data, for each of the generated unit lattice groups; and
performing a quality evaluation based on the calculated distance information.

**18.** The inspection method according to claim 17, wherein
the distance information used for performing the quality evaluation includes information indicating a minimum distance among each respective distance information from a plurality of the defect locations located in the unit lattice group to the actual surface region including the surface represented by the actual data.

**19.** The inspection method according to claim 17, wherein
the distance information used for performing the quality evaluation includes distance information from an arbitrary defect location located in the unit lattice group to each surface represented by the actual data.

**20.** The inspection method according to claim 17, wherein
the distance is acquired from each surface represented in the actual data to an arbitrary defect location located in the unit lattice group, and
the quality evaluation is determined based on the distance information included in a criteria set for each of the surfaces among the distance information from each of a plurality of surfaces to any one of the defect locations existing in the unit lattice group.

**21.** The inspection method according to claim 17, wherein
a criteria for determining the quality evaluation is set in accordance with a combination of attribute information attached to each surface of the actual data and attribute information attached to the unit lattice group.

**22.** A setting method for setting a target region for an evaluation of an internal structure of a specimen, comprising:

setting a plurality of the target regions in three-dimensional model data or three-dimensional actual data of the specimen;
setting a three-dimensional space between the target regions as a complementary region for an inspection or an evaluation of a defect based on mutual distance information of the set plurality of the target regions; and
setting a new target region including the set target region and the set complementary region.

**23.** The setting method according to claim 22, further comprising:

setting an unit lattice in the three-dimensional model data or three-dimensional actual data of the specimen;
setting the target region by using the unit lattice; and
setting the new target region by using the unit lattice.

**24.** The setting method according to claim 23, further comprising
determining whether or not to set the complementary region based on similarity information representing similarity of change in an appearance frequency of a defect with respect to change in a casting condition.

**25.** The setting method according to claim 23, further comprising
determining whether or not to set the complementary region based on the presence or absence of a surface including a part of a plurality of the target regions among surfaces constituting the specimen.

**26.** A setting method for setting a target region for an evaluation of an internal structure of a specimen, comprising:

acquiring surface shape information indicating a surface shape of the specimen and position information relating to a position of a defect estimated to be generated in the specimen;
deriving a predetermined region including the position of the estimated defect as a surface region along the surface shape of the specimen; and
setting the target region by expanding the surface region in a direction intersecting a direction along the surface shape in the internal structure of the specimen.

**27.** A defect evaluation device configured to set at least a part of a region in which a structure of a specimen exists as a target region for an evaluation of an internal structure of the specimen, comprising:

a position information setting unit configured to set an arbitrary position from the region in which the structure of the specimen exists; and
a setting unit configured to set the target region based on the set position information.

**28.** The defect evaluation device according to claim 27, wherein
the setting unit is configured to set the target region from the position toward a direction in which the structure of the specimen exists.

**29.** A defect evaluation device configured to set a target region for an evaluation of an internal structure of a specimen, comprising:

a position information setting unit configured to set position information including a plurality of positions with respect to the specimen;

a derivation unit configured to derive a surface region from surface element object data, representing at least a part of a surface in surface shape model data indicating a surface shape of the specimen, by setting surface boundary position information indicating a boundary of a region of a part of the surface element object data to the surface element object data, based on the position information; and

a setting unit configured to set the target region based on the surface region.

30. The defect evaluation device according to claim 29, wherein
the position information is information indicating a position related to a plurality of defects estimated to occur on the surface or inside of the specimen.

31. The defect evaluation device according to claim 29 or 30, wherein
the derivation unit includes a group boundary position information setting unit for generating group boundary position information with respect to the position information grouped under a predetermined conditions, and the derivation unit is configured to set a coverage surrounded by the group boundary position information in the surface element object data as the surface boundary position information.

32. The defect evaluation device according to claim 29 or 30, wherein
the setting unit is configured to set the target region by setting the target region from the surface region toward the inside of the specimen.

33. The defect evaluation device according to claim 32, wherein
the setting unit is configured to set the target region by setting the target region to a predetermined distance from the surface region toward the inside of the specimen.

34. The defect evaluation device according to claim 33, further comprising:

an attribute information acquisition unit configured to acquire the attribute information attached to the surface element object data including the surface region, wherein
the setting unit includes a target region boundary setting unit configured to set the predetermined distance based on the attribute information acquired by the attribute information acquisition unit.

35. The defect evaluation device according to claim 34, wherein

the attribute information acquisition unit is configured to acquire the attribute information of the surface of the specimen opposed to the surface region, and
the target region boundary setting unit is configured to set the predetermined distance based on the attribute information of a surface of the specimen opposed to the surface region acquired by the attribute information acquisition unit or the distance information from the surface region to the surface of the specimen opposed to the surface region.

36. The defect evaluation device according to claim 35, wherein
the target region boundary setting unit is configured to set the predetermined distance based on an aspect ratio of a convex portion or a recessed portion of the surface region.

37. The defect evaluation device according to claim 34, wherein
the target region boundary setting unit is configured to set the predetermined distance based on defect estimation information relating to defect estimated in the internal structure of the specimen in a direction in which the surface region is expanded.

38. The defect evaluation device according to claim 34, wherein
the target region boundary setting unit is configured to set the predetermined distance based on an area of the surface region.

39. The defect evaluation device according to claim 31, wherein

the derivation unit is configured to set the surface boundary position information with respect to the surface element object data respectively, and to derive a plurality of the surface regions, in a case where the group boundary position information are plurality included in the same surface element object data, for each of the group boundary position information, and

the setting unit is configured to set the target region for each of the plurality of the surface regions.

40. The defect evaluation device according to any one of claims 27 to 39, further comprising:

an identification unit configured to identify a defect location within the target region in a space of actual data by setting the target region in a space of the actual data, in a state where the target region set by the setting unit positionally matched with the actual data based on data obtained by actually measuring the specimen.

41. The defect evaluation device according to claim 40, wherein
the target region is represented by using a unit lattice.

42. The defect evaluation device according to claim 41, further comprising:

a lattice derivation unit configured to derive the unit lattice including the defect location identified by the identification unit; and

a lattice group generation unit configured to generate a unit lattice group by collecting the defect location or the derived unit lattice, in a case where a plurality of the unit lattices are derived, based on a positional relationship of the identified defect locations or the positional relationship of the derived unit lattices.

43. The defect evaluation device according to claim 42, further comprising:

a calculation unit configured to calculate distance information between the defect location included in the unit lattice group and an actual surface region including a surface represented by the actual data for each of the unit lattice groups generated by the lattice group generation unit; and

an evaluation unit configured to perform a quality evaluation based on the calculated distance information.

44. The defect evaluation device according to claim 43, wherein
the distance information used for performing the quality evaluation includes information indicating a minimum distance among each respective distance information from a plurality of the defect locations located in the unit lattice group to the actual surface region including the surface represented by the actual data.

45. The defect evaluation device according to claim 43, wherein
the distance information used for performing the quality evaluation includes distance information from an arbitrary defect location located in the unit lattice group to each surface represented by the actual data.

46. The defect evaluation device according to claim 43, wherein

the calculation unit is configured to obtain the distance from each surface represented in the actual data to an arbitrary defect location located in the unit lattice group, and

the evaluation unit is configured to determine the quality evaluation, in the unit lattice group, based on the distance information included in a criteria set for each of the surfaces among the distance information from each of a plurality of surfaces to any one of the defect locations existing in the unit lattice group.

47. The defect evaluation device according to claim 43, wherein
a criteria for determining the quality evaluation is set in accordance with a combination of attribute information attached to each surface of the actual data and attribute information attached to the unit lattice group.

48. A defect evaluation device configured to set a target region for an evaluation of an internal structure of a specimen, comprising:

a first setting unit configured to set a plurality of the target regions in three-dimensional model data or three-dimensional actual data of the specimen;

a second setting unit configured to set a three-dimensional space between the target regions as a complementary region for an inspection or an evaluation of a defect based on mutual distance information of the set plurality of the target regions; and

a third setting unit configured to set a new target region including the set target region and the set complementary region.

**49.** The defect evaluation device according to claim 48, further comprising:

a lattice setting unit configured to set an unit lattice in the three-dimensional model data or three-dimensional actual data of the specimen, wherein
the first setting unit is configured to set the target region by using the unit lattice, and
the third setting unit is configured to set the new target region by using the unit lattice.

**50.** The defect evaluation device according to claim 48, further comprising:
a determination unit configured to determine whether or not to set the complementary region based on similarity information representing similarity of change in an appearance frequency of a defect with respect to change in a casting condition.

**51.** The defect evaluation device according to claim 48, further comprising:
a determination unit configured to determine whether or not to set the complementary region based on the presence or absence of a surface including a part of a plurality of the target regions among the surfaces constituting the specimen.

**52.** A structure manufacturing method, comprising:

generating design information relating to a shape of a structure;
creating the structure based on the design information;
acquiring shape information by measuring the shape of the created structures in the target region set by the setting method according to claim 1 using the x-ray inspection apparatus; and
comparing the acquired shape information and the design information.

**53.** The structure manufacturing method according to claim 52, wherein
performing a re-fabrication of the structure based on the comparison results between the shape information and the design information.

**54.** The structure manufacturing method according to claim 53, wherein
the re-fabrication of the structure performs creation of the structure again based on the design information.

FIG. 1

1

DEFECTS EVALUATION DEVICE

56

57

INSPECTION CONTROL UNIT

EVALUATION UNIT

560

IMPORTANT SITE
SETTING UNIT

561

SURFACE INFORMATION
ACQUISITION UNIT

562

RISK REGION INFORMATION
SETTING UNIT

563

CALCULATION SURFACE
GENERATION UNIT

564

GRID SETTING UNIT

565

EVALUATION REGION
SETTING UNIT

566

EVALUATION REGION
EDITING UNIT

567

INSPECTION RESULTS
INFORMATION INPUT UNIT

568

CLUSTERING UNIT

571

EVALUATION REGION
INSPECTION UNIT

572

RISK DEGREE
DETERMINATION UNIT

11

INPUT
OPERATION UNIT

55

CONFIGURATION INFORMATION
ACQUISITION UNIT

58

DATA ACCUMULATION UNIT

# FIG. 2

FIG. 3

FIG. 4

# FIG.5

(a)

(b)

FIG. 6

# FIG.7

(a)

(b)

(c)

# FIG.8

(a)

(b)

# FIG.9

(a)

P11

S

700

830

P10

(b)

S

700    700

P12    821    822

# FIG.10

(a)

(b)

# FIG.11

(a)

(b)

FIG. 12

FIG. 13

# FIG.14

(a)

(b)

**FIG. 15**

# FIG.16

(a)

700-1
700-2
S
P1

(b)

700-3
S
P1

(c)

700-4
S
P1

(d)

A1
700-5
S
A2
P1

(e)

700-6
S
P1

(f)

700-7
S
P1

FIG. 17

FIG. 18

# FIG.19

(a)

(b)

# FIG.20

(a)

(b)

# FIG.21

(a)

960

950

(b)

960

950

FIG. 22

FIG. 23

# FIG.24

| CLUSTER ID | TOTAL NUMBER OF GRIDS | CLUSTER INDEX | NUMBER OF EVALUATION TARGETS | EVALUATION TARGET ID | DISTANCE OF EVALUATION TARGET | END SURFACE ATTRIBUTE | MACHINING MARGIN | END POINT SURFACE FUNCTION | CLUSTER DETERMI-NATION |
|---|---|---|---|---|---|---|---|---|---|
| 960-1 | 100 | 5 | 2 | L1-1 | 2 | BLACK SKIN (DENSE LAYER) | NO | | |
| | | | | L1-2 | 3 | MACHINED SURFACE | 1 | | |
| 960-2 | 15 | 3 | 1 | L2-1 | 5 | MACHINED SURFACE | 1 | | |
| 960-3 | 80 | 2 | 5 | L3-1 | 3 | MACHINED SURFACE | 1 | | |
| | | | | L3-2 | | BLACK SKIN (DENSE LAYER) | | | |
| | | | | L3-3 | 3 | BLACK SKIN (DENSE LAYER) | | | |
| | | | | L3-4 | | MACHINED HOLE | 0.5 | OIL PASSAGE | |
| | | | | L3-5 | 2 | BLACK SKIN (DENSE LAYER) | | | |
| ⋮ | ⋮ | ⋮ | ⋮ | ⋮ | ⋮ | ⋮ | ⋮ | ⋮ | ⋮ |

EP 3 492 912 A1

FIG. 25

EP 3 492 912 A1

FIG. 26

FIG. 27

EP 3 492 912 A1

FIG. 28

START

DESIGN PROCESSING  ~ S200

SHAPING PROCESSING  ~ S201

MEASUREMENT PROCESSING  ~ S202

EXAMINATION PROCESSING  ~ S203

CONFORMING PRODUCT?  ~ S204
YES
NO

REPARABLE?  ~ S205
NO
YES

REPAIR PROCESSING  ~ S206

END

FIG. 29

**EP 3 492 912 A1**

<table>
<tr><td colspan="2"><strong>INTERNATIONAL SEARCH REPORT</strong></td><td>International application No.<br>PCT/JP2016/072413</td></tr>
</table>

A. CLASSIFICATION OF SUBJECT MATTER
*G01N23/04(2006.01)i*

According to International Patent Classification (IPC) or to both national classification and IPC

B. FIELDS SEARCHED

Minimum documentation searched (classification system followed by classification symbols)
G01N23/00-G01N23/227, G01B15/00-G01B15/08

Documentation searched other than minimum documentation to the extent that such documents are included in the fields searched
Jitsuyo Shinan Koho       1922-1996   Jitsuyo Shinan Toroku Koho   1996-2016
Kokai Jitsuyo Shinan Koho  1971-2016   Toroku Jitsuyo Shinan Koho   1994-2016

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
|---|---|---|
| X | WO 2016/035148 A1  (Nikon Corp.),<br>10 March 2016 (10.03.2016),<br>paragraphs [0026], [0031], [0050]; fig. 5 to 6<br>(Family: none) | 1-2,14-28,<br>40-54 |
| X | JP 2010-175541 A  (General Electric Co.),<br>12 August 2010 (12.08.2010),<br>claim 1<br>& US 2010/0194749 A1<br>claim 1<br>& EP 2226609 A2 | 3-13,29-39 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 September 2016 (30.09.16) | Date of mailing of the international search report<br>11 October 2016 (11.10.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

| International application No. |
| --- |
| PCT/JP2016/072413 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    (Invention 1) claims 1-2, 14-21, 27-28, 40-47 and 52-54
    Claims 1-2, 14-15, 27-28, 40-41 and 52-54 lack novelty in the light of the document 1, and therefore have no special technical feature.
    Further, also claims 16-21 and 42-47 is mere design alteration for one prior art, and have no special technical feature.
    Consequently, claims 1-2, 14-21, 27-28, 40-47 and 52-54 are classified into Invention 1.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

| **INTERNATIONAL SEARCH REPORT** | International application No. |
| --- | --- |
| | PCT/JP2016/072413 |

<u>Continuation of Box No.III of continuation of first sheet(2)</u>

(Invention 2) claims 3-13 and 29-39

It is not considered that claims 3-13 and 29-39 have a technical feature same as or corresponding to claim 1 which is classified into Invention 1.

In addition, claims 3-13 and 29-39 have no relationship such that these claims are substantially same as or equivalent to any claim classified into Invention 1.

Consequently, claims 3-13 and 29-39 cannot be classified into Invention 1.

Accordingly, claims 3-13 and 29-39 are classified into Invention 2.

(Invention 3) claims 22-25 and 48-51

It is not considered that claims 22-25 and 28-51 have a technical feature same as or corresponding to claim 1 which is classified into Invention 1 or claim 3 which is classified into Invention 2.

Further, claims 22-25 and 48-51 have no relationship such that these claims are substantially same as or equivalent to any claim classified into Invention 1 or Invention 2.

Consequently, claims 22-25 and 48-51 cannot be classified into either Invention 1 or Invention 2.

Accordingly, claims 22-25 and 48-51 are classified into invention 3.

(Invention 4) claim 26

It is not considered that claim 26 has a technical feature same as or corresponding to claim 1 which is classified into Invention 1, claim 3 which is classified into Invention 2 or claim 22 which is classified into Invention 3.

Further, claim 26 has no relationship such that said claim 26 is substantially same as or equivalent to any claim classified into Invention 1, Invention 2 or Invention 3.

Consequently, claim 26 cannot be classified into any one of Inventions 1, 2 and 3.

Accordingly, claim 26 is classified into Invention 4.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016072413 W

- JP 2006305581 A